# EUROPEAN PATENT SPECIFICATION

(11) **EP 4 534 238 B1**
(45) Date of publication and mention of the grant of the patent: **13.05.2026**
(21) Application number: 23938067.8
(22) Date of filing: 16.06.2023
(51) Int. Cl.: B23P 15/00, H01M 50/204, H01M 50/224, H01M 50/244, B21D 11/10, B21D 5/08

(54) **PREPARATION METHOD FOR ROLL FORMING FRAME AND ROLL FORMING FRAME**
HERSTELLUNGSVERFAHREN FÜR ROLLFORMRAHMEN UND ROLLFORMRAHMEN
PROCÉDÉ DE PRÉPARATION D'UN CADRE DE PROFILAGE PAR ROULEAUX, ET CADRE DE PROFILAGE PAR ROULEAUX

(30) Priority: 22.05.2023 CN 202310579604
(43) Date of publication of application: 09.04.2025
(73) Proprietor: Suzhou Efficient Profile Intelligent Manufacturing Co., Ltd, Suzhou, Jiangsu 215331 (CN)
(72) Inventor: LI, Danyang, Suzhou, Jiangsu 215331 (CN); ZHANG, Hui, Suzhou, Jiangsu 215331 (CN)
(74) Representative: Novagraaf Group
(86) International application number: PCT/CN2023/100557
(87) International publication number: WO 2024/239398

(56) References cited:
- CN-A- 111 916 603
- CN-A- 112 078 525
- CN-A- 114 192 641
- CN-A- 115 228 987
- CN-A- 115 507 286
- CN-A- 115 890 167
- CN-U- 203 061 615
- CN-U- 216 288 746
- KR-A- 20230 055 176

## Description

### TECHNICAL FIELD

The present invention relates to the technical field of rollforming profiles, specifically, to a method for manufacturing a rollforming frame, and the rollforming frame.

### BACKGROUND

In the current processing method for the main structure of a battery pack frame, joints of left and right longitudinal beams and front and rear transverse beams (four parts) are peripherally butt-welded to form a prefabricated frame, then the prefabricated frame is welded with a bottom steel plate, and finally a battery pack tray is formed. The above processing method has the following defects: a, there are many types of materials, including five types of materials; b, there is a long machining process including frame material rolling, welding, frame butt-welding, steel plate and frame butt-welding, and laser hole-cutting, resulting in low production efficiency; c, there is high difficulty in quality control and welding due to a large amount of deformation after welding and low dimensional accuracy, and a subsequent laser cutting process is needed to ensure the mounting accuracy of riveting holes; and d, there are high costs for equipment investment, machining, labor, etc.

CN 216288746U discloses a a battery tray, comprising a closed frame and a support part arranged at the bottom of the frame; the top of the frame is provided with an upper cover; the upper cover, the frame and the support part form a closed cavity for accommodating batteries. The cavity is provided with a reinforcing beam, both ends of the reinforcing beam are connected with the frame, and the reinforcing beam divides the first channel surrounded by the closed frame into a second channel and a third channel, and it is characterized in that the support part includes a maintenance cover Plate and bottom plate, the maintenance cover plate is detachably arranged at the bottom of the second channel, the bottom plate is arranged at the bottom of the third channel, the inner wall of the second channel is provided with a plurality of first brackets, and the battery elements in the second channel are installed on the first on the stand.

CN 111916603A discloses a rolled section bar and a preparation method thereof, a battery pack framework and a battery pack, wherein the rolled section bar comprises a rolled section bar body which is prepared by rolling and bending a steel belt for multiple times, the rolled section bar body comprises a first part, a second part and reinforcing ribs, the reinforcing ribs in the middle part enable the rolled section bar to be effectively further thinned and reduced in weight under the condition that the strength and the rigidity are not reduced, the rolled section bar provided by the invention can be used for enclosing to form the battery pack framework, an L-shaped pipe structure formed by enclosing the second part and the reinforcing ribs can realize the bottom supporting function of a battery pack.

However, these prior arts fail to overcome the defects mentioned above.

### SUMMARY

In view of the defects in the prior art, the present invention aims to provide a method for manufacturing a rollforming frame, and the rollforming frame.

A method for manufacturing a rollforming frame provided according to an embodiment of the present invention includes the following steps:
step 1: separately rolling and bending two opposite ends of a to-be-machined plate to separately form a first vertical wall and a first horizontal wall connected to each other at the two opposite ends of the to-be-machined plate, where a bottom plate is formed between the two first vertical walls;
step 2: for each of the two opposite ends of the bottom plate, rolling and bending one end of the first horizontal wall adjacent to the first vertical wall to form a stepped bent structure;
step 3: for each of the two opposite ends of the bottom plate, rolling and bending the first horizontal wall to form a second vertical wall, a second horizontal wall, and a third horizontal wall that are connected;
step 4: for each of the two opposite ends of the bottom plate, rolling and bending the second horizontal wall to form a third vertical wall and a fourth horizontal wall connected to each other; and rolling and bending the third horizontal wall to form a fourth vertical wall and a fifth horizontal wall connected to each other, where the fourth vertical wall abuts against the first vertical wall;
step 5: for each of the two opposite ends of the bottom plate, performing laser welding on a joint of the fourth vertical wall and the first vertical wall, where the second vertical wall, the third vertical wall, the fourth horizontal wall, and the first vertical wall form a first cavity and a second cavity, respectively, at the two opposite ends of the bottom plate;
step 6: for each of the two opposite ends of the bottom plate, rolling and bending one end of the fifth horizontal wall away from the fourth vertical wall to form a connecting edge and a sixth horizontal wall connected to each other;
step 7: for each of the two opposite ends of the bottom plate, rolling and bending the sixth horizontal wall to form a fifth vertical wall and a seventh horizontal wall connected to each other, where the connecting edge abuts against the second vertical wall; and
step 8: for each of the two opposite ends of the bottom plate, performing laser welding on a joint of the connecting edge and the second vertical wall, where the fourth vertical wall, the fifth vertical wall, the seventh horizontal wall, and the second vertical wall form a third cavity and a fourth cavity, respectively, at the two opposite ends of the bottom plate.

Preferably, in the step 1, a first bend structure is formed between the first vertical wall and the bottom plate, and a second bend structure is formed between the first horizontal wall and the first vertical wall;
in the step 2, a third bend structure and a fourth bend structure are formed in the stepped bent structure;
in the step 3, two ends of the second horizontal wall are connected to the stepped bent structure and the second vertical wall respectively, a fifth bend structure is formed between the second horizontal wall and the second vertical wall, and a sixth bend structure is formed between the second vertical wall and the third horizontal wall;
in the step 4, a seventh bend structure is formed between the third vertical wall and the fourth horizontal wall, and two ends of the fourth horizontal wall are connected to the stepped bent structure and the third vertical wall respectively;
an eighth bend structure is formed between the fourth vertical wall and the fifth horizontal wall, and two ends of the fourth vertical wall are connected to the fifth horizontal wall and the second vertical wall respectively;
in the step 6, a ninth bend structure is formed between the connecting edge and the sixth horizontal wall; and
in the step 7, a tenth bend structure is formed between the fifth vertical wall and the seventh horizontal wall, and two ends of the fifth vertical wall are connected to the connecting edge and the seventh horizontal wall respectively.

Preferably, the step 1 specifically includes the following steps:
step 1.1: separately rolling and bending the two opposite ends of the to-be-machined plate to form a first side edge structure and a second side edge structure at the two opposite ends of the to-be-machined plate respectively, where the bottom plate is formed between the first side edge structure and the second side edge structure, a first corner structure is formed between the first side edge structure and the bottom plate, and a first corner structure is formed between the second side edge structure and the bottom plate;
step 1.2: separately rolling and bending the first side edge structure and the second side edge structure to form the first vertical wall and the first horizontal wall, where a second corner structure is formed between the first vertical wall and the first horizontal wall; and
step 1.3: rolling and bending the first vertical wall and the first horizontal wall for multiple times, gradually reducing an angle of the first corner structure to form the first bend structure, and gradually reducing an angle of the second corner structure to form the second bend structure.

Further, in the step 1.1, the angle of the first corner structure is 177°;
in the step 1.2, the angle of the first corner structure is 170°, and the angle of the second corner structure is 172°; and
the step 1.3 specifically includes the following steps:
   step 1.3.1: rolling and bending the first vertical wall and the first horizontal wall, such that the angle of the first corner structure is 160°, and the angle of the second corner structure is 162°;
   step 1.3.2: rolling and bending the first vertical wall and the first horizontal wall, such that the angle of the first corner structure is 145°, and the angle of the second corner structure is 148°;
   step 1.3.3: rolling and bending the first vertical wall and the first horizontal wall, such that the angle of the first corner structure is 130°, and the angle of the second corner structure is 132°;
   step 1.3.4: rolling and bending the first vertical wall and the first horizontal wall, such that the angle of the first corner structure is 115°, and the angle of the second corner structure is 118°;
   step 1.3.5: rolling and bending the first vertical wall and the first horizontal wall, such that the angle of the first corner structure is 100°, and the angle of the second corner structure is 103°;
   step 1.3.6: rolling and bending the first vertical wall and the first horizontal wall, such that the angle of the first corner structure is 90°, the first bend structure is formed, and the angle of the second corner structure is 93°; and
   step 1.3.7: rolling and bending the first horizontal wall, such that the angle of the second corner structure is 90°, and the second bend structure is formed.

Further, the step 2 specifically includes the following steps:
step 2.1: rolling and bending one end of the first horizontal wall adjacent to the first vertical wall to form a stepped planar structure and a third side edge structure, where a third corner structure is formed between the stepped planar structure and the third side edge structure;
step 2.2: rolling and bending the third side edge structure to form a stepped inclined surface structure and a fourth side edge structure, where the third corner structure is formed between the stepped planar structure and the stepped inclined surface structure, and a fourth corner structure is formed between the stepped inclined surface structure and the fourth side edge structure; and
step 2.3: rolling and bending the fourth side edge structure and the stepped inclined surface structure for multiple times, gradually increasing an angle of the third corner structure to form the third bend structure, and gradually increasing an angle of the fourth corner structure to form the fourth bend structure.

Further, in the step 2.1, the angle of the third corner structure is 3°;
in the step 2.2, the angle of the third corner structure is 15° and the angle of the fourth corner structure is 13°; and
the step 2.3 specifically includes the following steps:
   step 2.3.1: rolling and bending the fourth side edge structure and the stepped inclined surface structure, such that the angle of the third corner structure is 30° and the angle of the fourth corner structure is 28°;
   step 2.3.2: rolling and bending the fourth side edge structure and the stepped inclined surface structure, such that the angle of the third corner structure is 45° and the angle of the fourth corner structure is 42°;
   step 2.3.3: rolling and bending the fourth side edge structure and the stepped inclined surface structure, such that the angle of the third corner structure is 54°, the third bend structure is formed, and the angle of the fourth corner structure is 52°; and
   step 2.3.4: rolling and bending the fourth side edge structure, such that the angle of the fourth corner structure is 54° and the fourth bend structure is formed.

Further, the step 3 specifically includes the following steps:
step 3.1: rolling and bending the first horizontal wall to form the second horizontal wall and a fifth side edge structure, where a fifth corner structure is formed between the second horizontal wall and the fifth side edge structure;
step 3.2: rolling and bending the fifth side edge structure to form the second vertical wall and the third horizontal wall, where the fifth corner structure is formed between the second horizontal wall and the second vertical wall, and a sixth corner structure is formed between the second vertical wall and the third horizontal wall; and
step 3.3: rolling and bending the second vertical wall and the third horizontal wall for multiple times, gradually reducing an angle of the fifth corner structure to form the fifth bend structure, and gradually reducing an angle of the sixth corner structure to form the sixth bend structure.

Further, in the step 3.1, the angle of the fifth corner structure is 176°;
in the step 3.2, the angle of the fifth corner structure is 165° and the angle of the sixth corner structure is 170°; and
the step 3.3 specifically includes the following steps:
   step 3.3.1: rolling and bending the second vertical wall and the third horizontal wall, such that the angle of the fifth corner structure is 150°, and the angle of the sixth corner structure is 155°;
   step 3.3.2: rolling and bending the second vertical wall and the third horizontal wall, such that the angle of the fifth corner structure is 135°, and the angle of the sixth corner structure is 140°;
   step 3.3.3: rolling and bending the second vertical wall and the third horizontal wall, such that the angle of the fifth corner structure is 120°, and the angle of the sixth corner structure is 125°;
   step 3.3.4: rolling and bending the second vertical wall and the third horizontal wall, such that the angle of the fifth corner structure is 105°, and the angle of the sixth corner structure is 110°;
   step 3.3.5: rolling and bending the second vertical wall and the third horizontal wall, such that the angle of the fifth corner structure is 90°, the fifth bend structure is formed, and the angle of the sixth corner structure is 95°; and
   step 3.3.6: rolling and bending the third horizontal wall, such that the angle of the sixth corner structure is 90° and the sixth bend structure is formed.

Further, the step 4 specifically includes the following steps:
step 4.1: rolling and bending the second horizontal wall to form the third vertical wall and the fourth horizontal wall, where a seventh corner structure is formed between the third vertical wall and the fourth horizontal wall;
step 4.2: rolling and bending the third vertical wall, and reducing an angle of the seventh corner structure for the first time;
step 4.3: rolling the third horizontal wall to form the fourth vertical wall and the fifth horizontal wall, where an eighth corner structure is formed between the fourth vertical wall and the fifth horizontal wall; and rolling and bending the third vertical wall, and reducing the angle of the seventh corner structure for the second time; and
step 4.4: rolling and bending the fifth horizontal wall and the third vertical wall for multiple times, gradually reducing the angle of the seventh corner structure to form the seventh bend structure, and gradually reducing an angle of the eighth corner structure to form the eighth bend structure.

Further, in the step 4.1, the angle of the seventh corner structure when formed is 175°;
in the step 4.2, the angle of the seventh corner structure is 170°;
in the step 4.3, the angle of the seventh corner structure is 160°, and the angle of the eighth corner structure is 170°; and
the step 4.4 specifically includes the following steps:
   step 4.4.1: rolling and bending the fifth horizontal wall and the third vertical wall, such that the angle of the seventh corner structure is 150°, and the angle of the eighth corner structure is 160°;
   step 4.4.2: rolling and bending the fifth horizontal wall and the third vertical wall, such that the angle of the seventh corner structure is 140°, and the angle of the eighth corner structure is 150°;
   step 4.4.3: rolling and bending the fifth horizontal wall and the third vertical wall, such that the angle of the seventh corner structure is 130°, and the angle of the eighth corner structure is 140°;
   step 4.4.4: rolling and bending the fifth horizontal wall and the third vertical wall, such that the angle of the seventh corner structure is 120°, and the angle of the eighth corner structure is 130°;
   step 4.4.5: rolling and bending the fifth horizontal wall and the third vertical wall, such that the angle of the seventh corner structure is 110°, and the angle of the eighth corner structure is 120°;
   step 4.4.6: rolling and bending the fifth horizontal wall and the third vertical wall, such that the angle of the seventh corner structure is 100°, and the angle of the eighth corner structure is 110°;
   step 4.4.7: rolling and bending the fifth horizontal wall and the third vertical wall, such that the angle of the seventh corner structure is 90°, the seventh bend structure is formed, and the angle of the eighth corner structure is 100°; and
   step 4.4.8: rolling and bending the fifth horizontal wall, such that the angle of the eighth corner structure is 90°, and the eighth bend structure is formed.

Further, the step 6 specifically includes the following steps:
step 6.1: rolling and bending one end of the fifth horizontal wall away from the fourth vertical wall to form the connecting edge and the sixth horizontal wall, where a ninth corner structure is formed between the connecting edge and the sixth horizontal wall; and
step 6.2: rolling and bending the connecting edge for multiple times, and gradually reducing an angle of the ninth corner structure to form the ninth bend structure.

Further, in the step 6.1, the angle of the ninth corner structure is 180°; and
the step 6.2 specifically includes the following steps:
step 6.2.1: rolling and bending the connecting edge, such that the angle of the ninth corner structure is 150°;
step 6.2.2: rolling and bending the connecting edge, such that the angle of the ninth corner structure is 120°; and
step 6.2.3: rolling and bending the connecting edge, such that the angle of the ninth corner structure is 90°, and the ninth bend structure is formed.

Further, the step 7 specifically includes the following steps:
step 7.1: rolling and bending the sixth horizontal wall to form the fifth vertical wall and the seventh horizontal wall, where a tenth corner structure is formed between the fifth vertical wall and the seventh horizontal wall; and
step 7.2: rolling and bending the fifth vertical wall for multiple times, and gradually reducing an angle of the tenth corner structure to form the tenth bend structure.

Further, in the step 7.1, the angle of the tenth corner structure is 163°; and
the step 7.2 specifically includes the following steps:
step 7.2.1: rolling and bending the fifth vertical wall, such that the angle of the tenth corner structure is 145°;
step 7.2.2: rolling and bending the fifth vertical wall, such that the angle of the tenth corner structure is 130°;
step 7.2.3: rolling and bending the fifth vertical wall, such that the angle of the tenth corner structure is 115°;
step 7.2.4: rolling and bending the fifth vertical wall, such that the angle of the tenth corner structure is 100°; and
step 7.2.5: rolling and bending the fifth vertical wall, such that the angle of the tenth corner structure is 90°, and the tenth bend structure is formed.

Further, in the step 8, a left longitudinal beam portion and a right longitudinal beam portion are formed at the two opposite ends of the bottom plate; and
the method for manufacturing a rollforming frame further includes the following steps:
step 9: cutting the left longitudinal beam portion and the right longitudinal beam portion that are located at four corners of the bottom plate to form a front longitudinal beam plate and a rear longitudinal beam plate at another two opposite ends of the bottom plate;
step 10: for each of the another two opposite ends of the bottom plate, separately bending the front longitudinal beam plate and the rear longitudinal beam plate to form a sixth vertical wall and an eighth horizontal wall, where an eleventh bend structure is formed between the sixth vertical wall and the eighth horizontal wall;
step 11: for each of the another two opposite ends of the bottom plate, bending the eighth horizontal wall to form a seventh vertical wall and a ninth horizontal wall, where a twelfth bend structure is formed between the seventh vertical wall and the ninth horizontal wall;
step 12: for each of the another two opposite ends of the bottom plate, bending the seventh vertical wall to form an eighth vertical wall and a tenth horizontal wall, where a thirteenth bend structure is formed between the eighth vertical wall and the tenth horizontal wall;
step 13: for each of the another two opposite ends of the bottom plate, bending the ninth horizontal wall, such that the sixth vertical wall abuts against the bottom plate, a fourteenth bend structure is formed between the ninth horizontal wall and the bottom plate, and a front longitudinal beam portion and a rear longitudinal beam portion are respectively formed at the another two opposite ends of the bottom plate; and
step 14: welding a joint of the front longitudinal beam portion and the left longitudinal beam portion, welding a joint of the front longitudinal beam portion and the right longitudinal beam portion, welding a joint of the rear longitudinal beam portion and the left longitudinal beam portion, welding a joint of the rear longitudinal beam portion and the right longitudinal beam portion, and welding a joint of the sixth vertical wall and the bottom plate.

The present invention further provides a rollforming frame manufactured using the above method for manufacturing a rollforming frame.

Further, the rollforming frame includes a bottom plate, a left longitudinal beam portion, and a right longitudinal beam portion, where the left longitudinal beam portion and the right longitudinal beam portion are disposed at two opposite ends of the bottom plate respectively;
each of the left longitudinal beam portion and the right longitudinal beam portion includes the first vertical wall, the fourth horizontal wall, the third vertical wall, the second vertical wall, the fourth vertical wall, the seventh horizontal wall, the fifth vertical wall, and the connecting edge that are sequentially connected;
the fourth horizontal wall, the third vertical wall, and the second vertical wall form a first notch structure, and the second vertical wall, the fourth vertical wall, and the seventh horizontal wall form a second notch structure;
the first vertical wall is connected to an opening end of the first notch structure, and the fourth vertical wall is connected to the first vertical wall; and
the fifth vertical wall is connected to an opening end of the second notch structure, and the connecting edge is connected to one end of the second vertical wall adjacent to the third vertical wall.

### BRIEF DESCRIPTION OF THE DRAWINGS

Other features, objectives and advantages of the present invention will become more apparent upon reading the detailed description of the non-restrictive embodiments with reference to the following drawings, in which:
FIG. 1 is a flowchart of steps of a method for manufacturing a rollforming frame in the present invention;
FIG. 2 is a schematic diagram of 1st to 9th passes of forming in a method for manufacturing a rollforming frame in an embodiment;
FIGS. 3 to 5 are schematic diagrams of angles for 1st to 9th passes of forming;
FIG. 6 is a schematic diagram of 10th to 15th passes of forming in a method for manufacturing a rollforming frame in an embodiment;
FIGS. 7 to 9 are schematic diagrams of angles for 10th to 15th passes of forming;
FIG. 10 is a schematic diagram of 16th to 23rd passes of forming in a method for manufacturing a rollforming frame in an embodiment;
FIGS. 11 to 13 are schematic diagrams of angles for 16th to 23rd passes of forming;
FIG. 14 is a schematic diagram of 24th to 34th passes of forming in a method for manufacturing a rollforming frame in an embodiment;
FIGS. 15 to 18 are schematic diagrams of angles for 24th to 34th passes of forming;
FIG. 19 is a schematic diagram of welding during a 35th pass of forming in a method for manufacturing a rollforming frame in an embodiment;
FIG. 20 is a schematic diagram of 36th to 39th passes of forming in a method for manufacturing a rollforming frame in an embodiment;
FIGS. 21 and 22 are schematic diagrams of angles for 36th to 39th passes of forming;
FIG. 23 is a schematic diagram of 40th to 45th passes of forming in a method for manufacturing a rollforming frame in an embodiment;
FIGS. 24 and 25 are schematic diagrams of angles for 40th to 45th passes of forming;
FIG. 26 is a schematic structural diagram of all bend structures;
FIG. 27 is a schematic diagram of welding during a 46th pass of forming in a method for manufacturing a rollforming frame in an embodiment;
FIG. 28 is a schematic diagram of shaping during 47th and 48th passes of forming in a method for manufacturing a rollforming frame in an embodiment;
FIG. 29 is a schematic structural diagram of a rollforming frame manufactured by a method for manufacturing a rollforming frame in an embodiment;
FIG. 30 is a front view of a rollforming frame manufactured by a method for manufacturing a rollforming frame in an embodiment; and
FIGS. 31 to 35 are structural diagrams of a rollforming frame in steps 9 to 14 of a method for manufacturing a rollforming frame in an embodiment.

In the drawings:

| | | | | | |
|---|---|---|---|---|---|
| first vertical wall | 1 | stepped planar structure | 22 | ninth horizontal wall | 43 |
| first horizontal wall | 2 | third side edge structure | 23 | twelfth bend structure | 44 |
| bottom plate | 3 | stepped inclined surface structure | | eighth vertical wall | 45 |
| stepped bent structure | 4 | | 24 | tenth horizontal wall | 46 |
| second vertical wall | 5 | fourth side edge structure | 25 | thirteenth bend structure | |
| second horizontal wall | 6 | fifth side edge structure | 26 | | 47 |
| third horizontal wall | 7 | first bend structure | 27 | fourteenth bend structure | |
| third vertical wall | 8 | second bend structure | 28 | | 48 |
| fourth horizontal wall | 9 | third bend structure | 29 | left transverse beam portion | |
| fourth vertical wall | 10 | fourth bend structure | 30 | | 49 |
| fifth horizontal wall | 11 | fifth bend structure | 31 | right transverse beam portion | |
| first cavity | 12 | sixth bend structure | 32 | | 50 |
| second cavity | 13 | seventh bend structure | 33 | front transverse beam portion | |
| connecting edge | 14 | eighth bend structure | 34 | | 51 |
| sixth horizontal wall | 15 | ninth bend structure | 35 | rear transverse beam portion | |
| fifth vertical wall | 16 | tenth bend structure | 36 | | 52 |
| seventh horizontal wall | 17 | front transverse beam plate | | first corner structure | 53 |
| third cavity | 18 | | 37 | second corner structure | 54 |
| fourth cavity | 19 | rear transverse beam plate | | third corner structure | 55 |
| first side edge structure | 20 | | 38 | fourth corner structure | 56 |
| second side edge structure | 21 | sixth vertical wall | 39 | fifth corner structure | 57 |
| | | eighth horizontal wall | 40 | sixth corner structure | 58 |
| | | eleventh bend structure | 41 | seventh corner structure | |
| | | seventh vertical wall | 42 | | 59 |
| | | | | eighth corner structure | 60 |
| | | | | ninth corner structure | 61 |
| | | | | tenth corner structure | 62 |

### DETAILED DESCRIPTION OF THE EMBODIMENTS

The present invention is described in detail below with reference to specific embodiments. The following embodiments will assist those skilled in the art in further understanding the present invention, but do not limit the present invention in any form. It should be pointed out that several changes and improvements may also be made by those of ordinary skill in the art without departing from the scope of protection of the present invention which is defined by the claims.

### Embodiment 1:

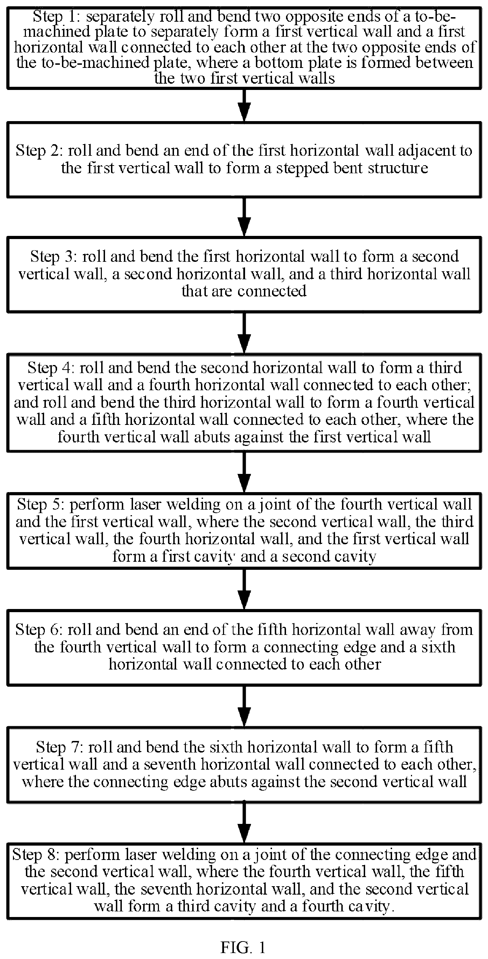

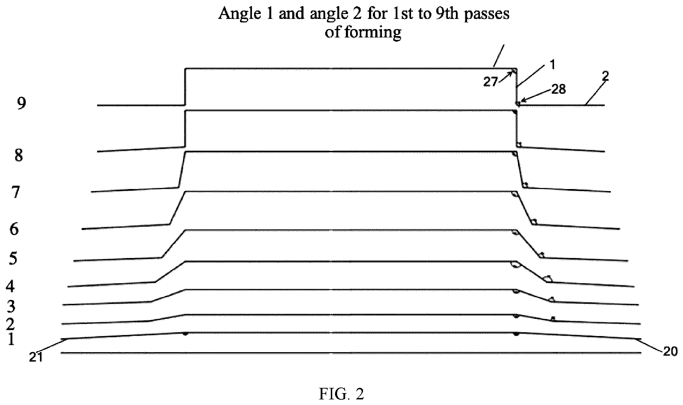

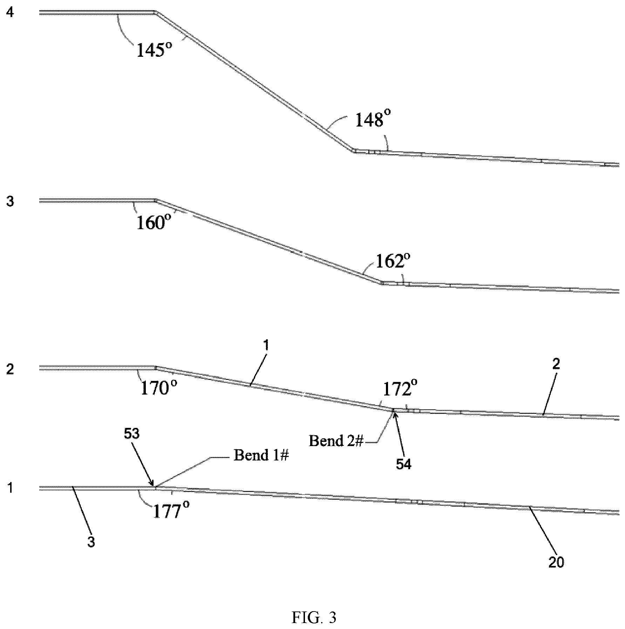

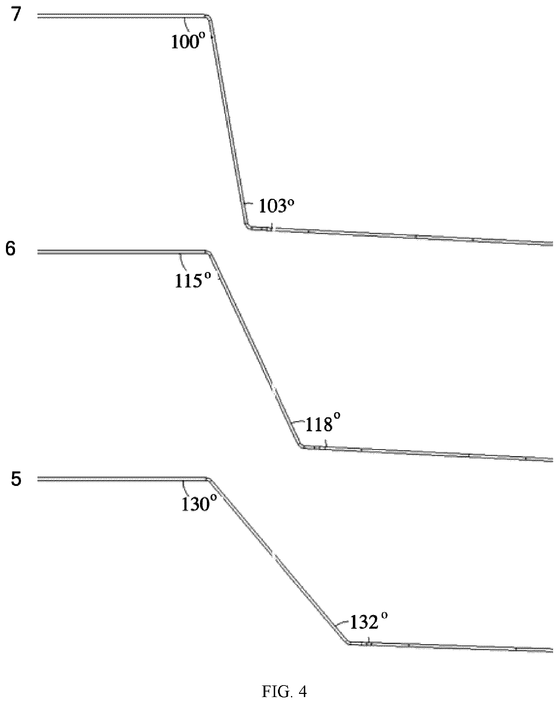

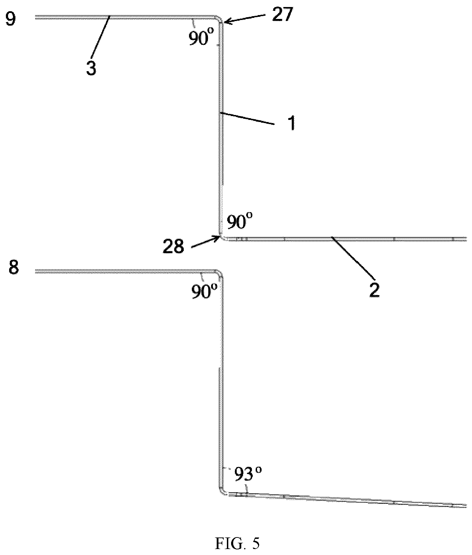

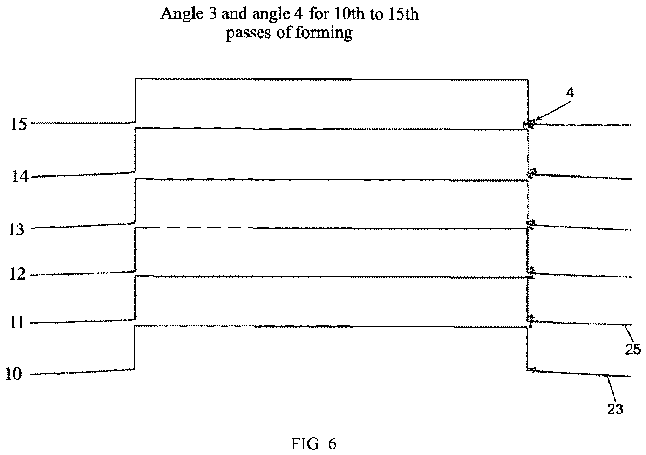

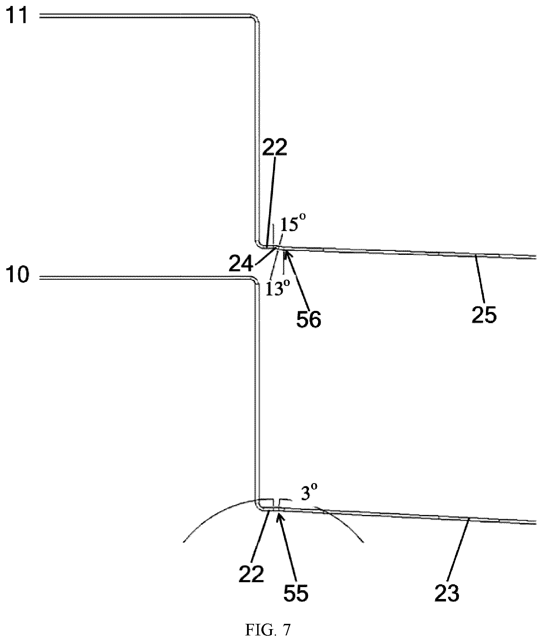

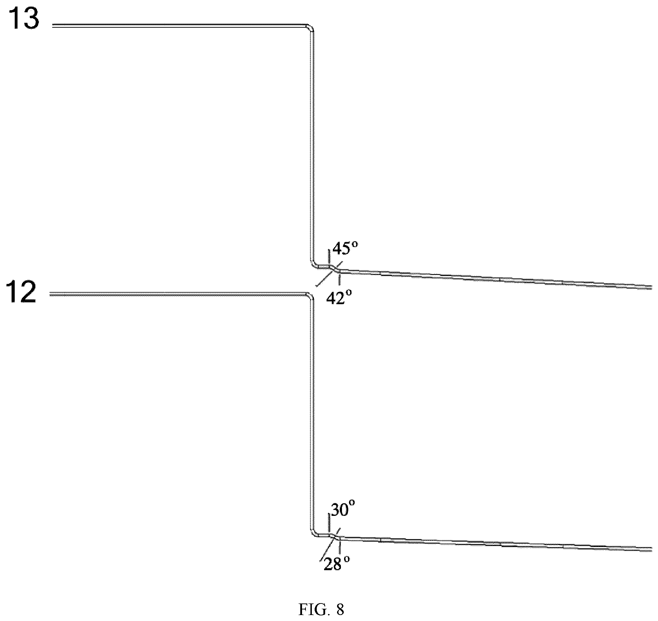

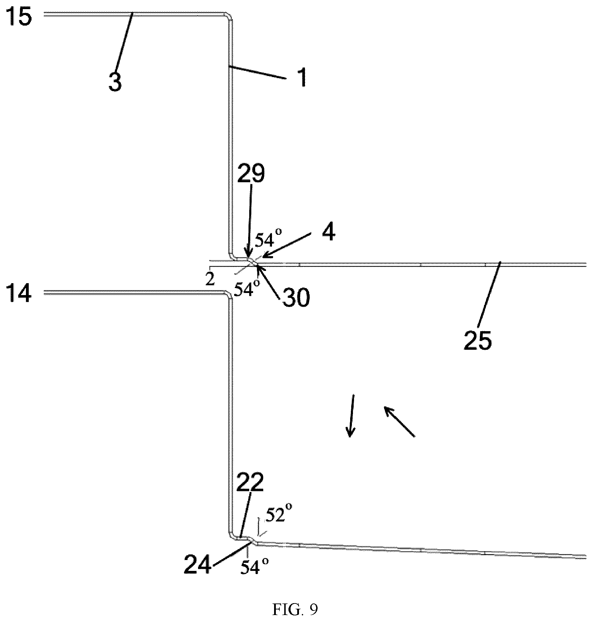

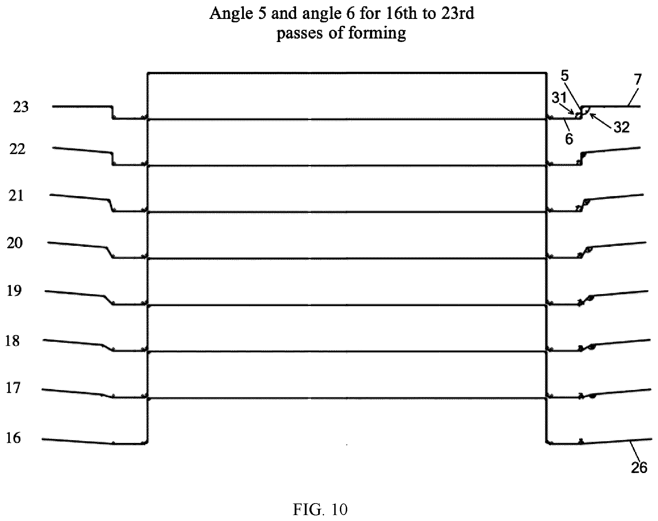

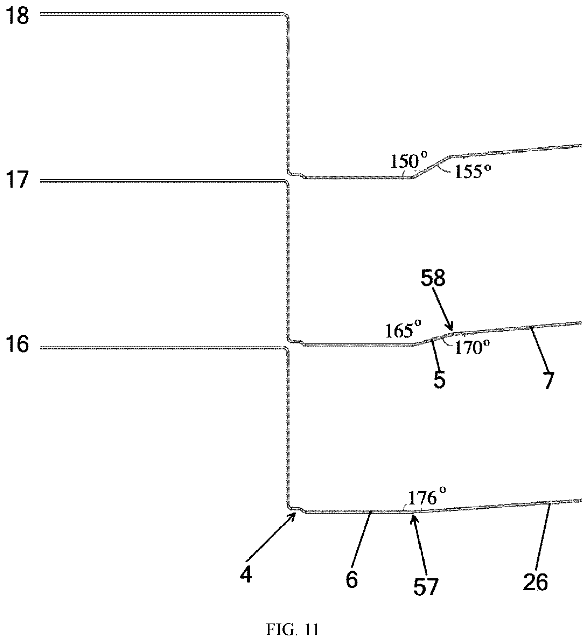

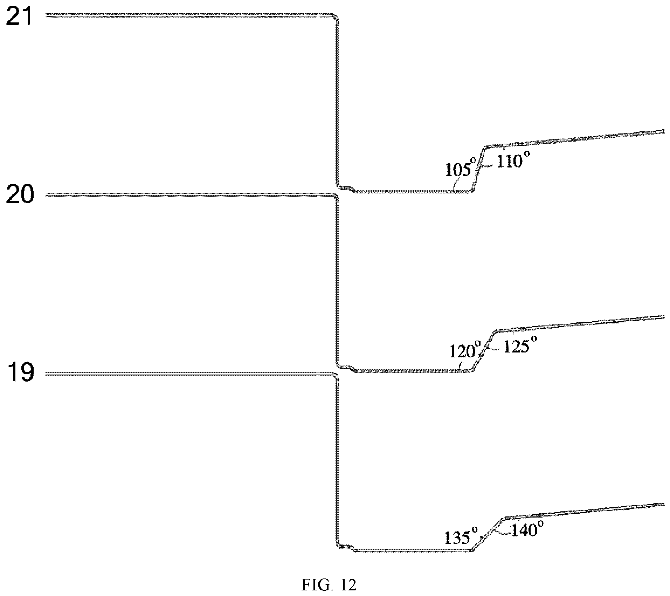

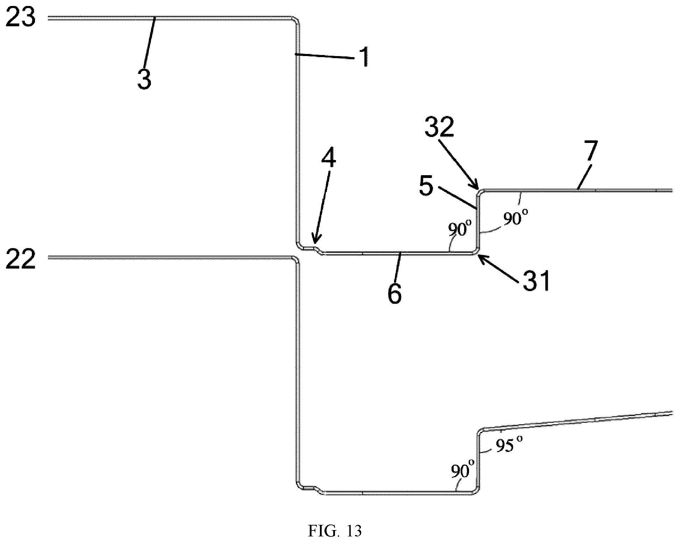

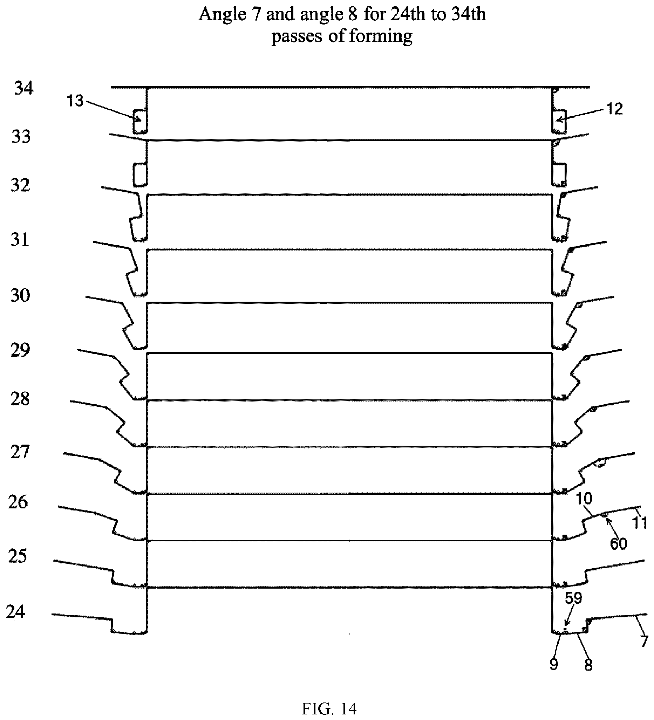

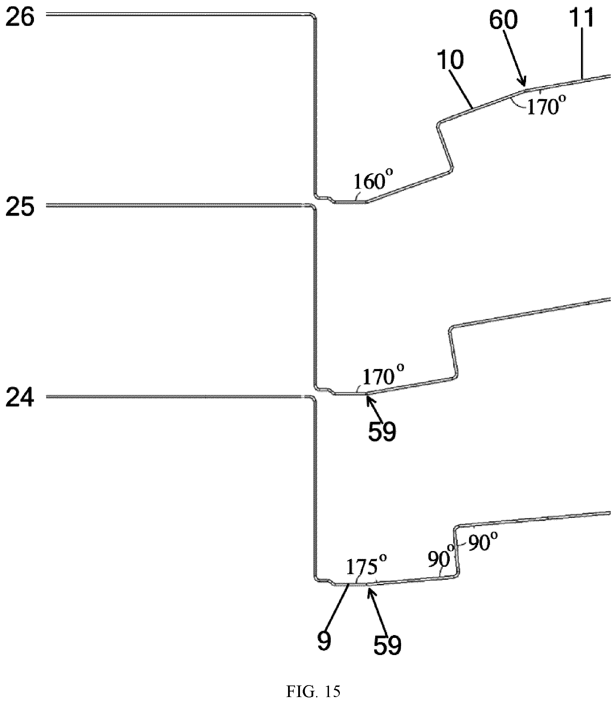

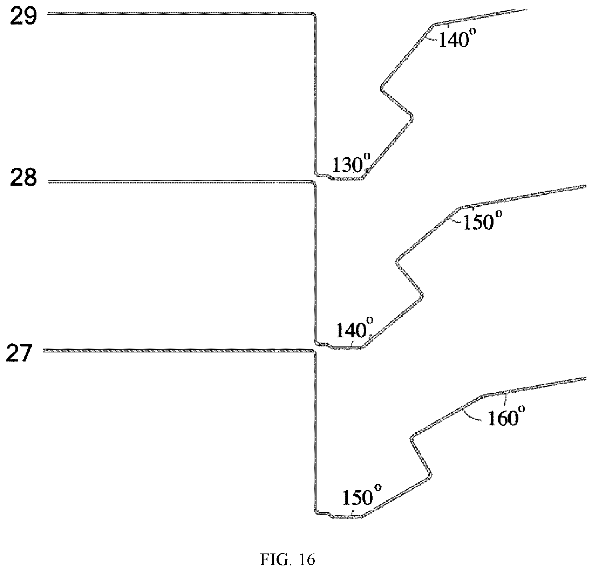

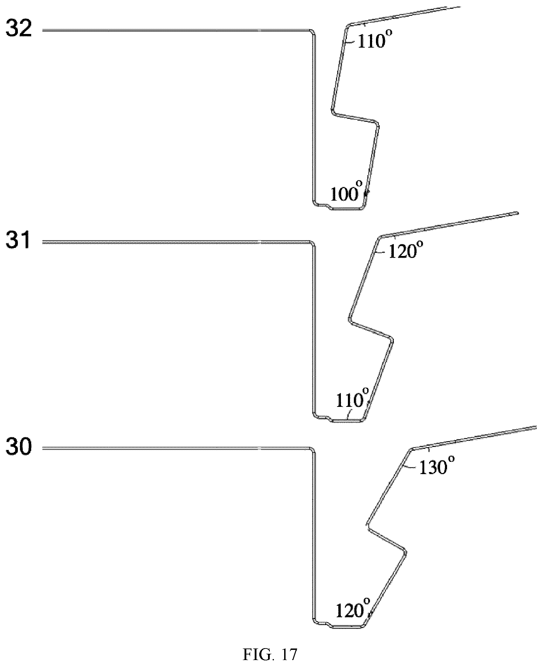

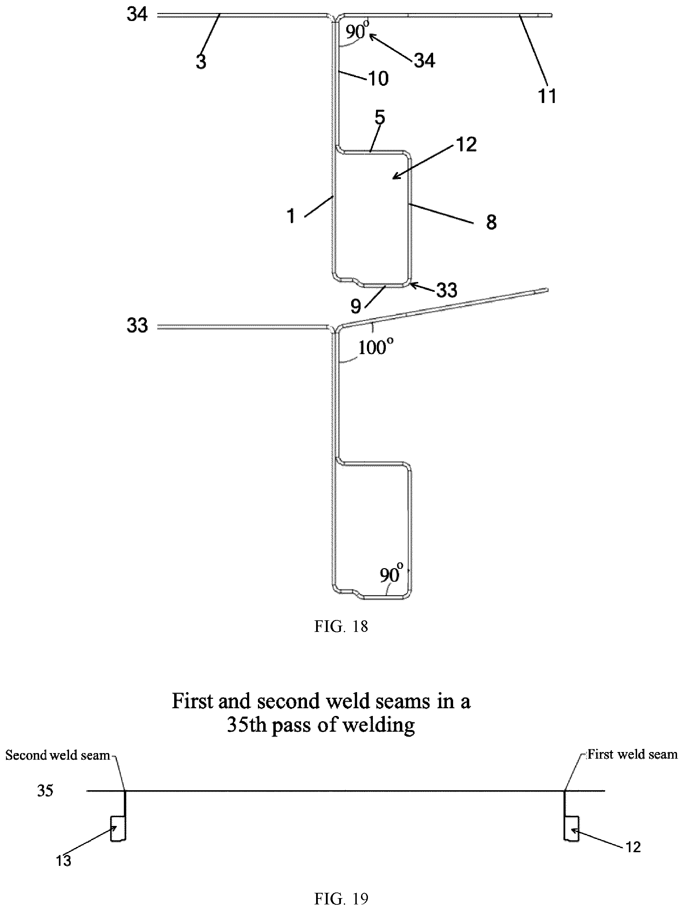

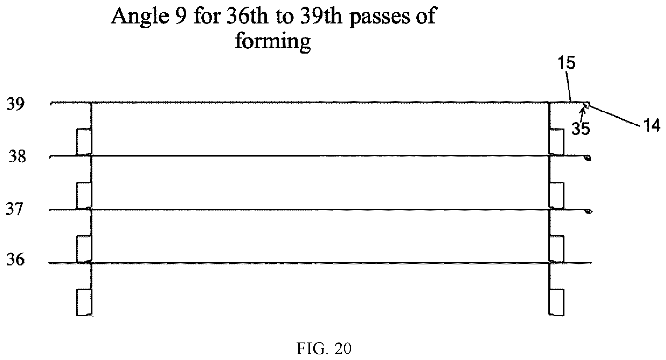

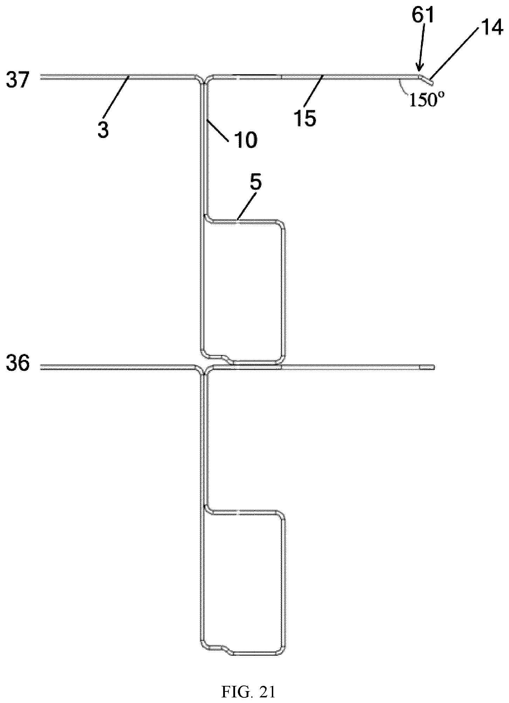

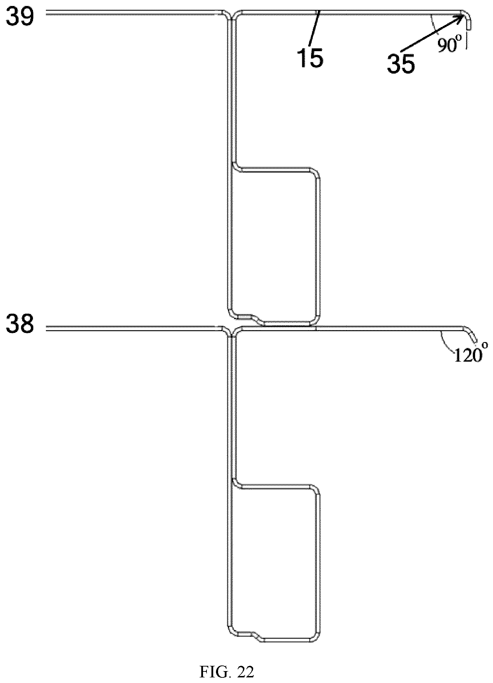

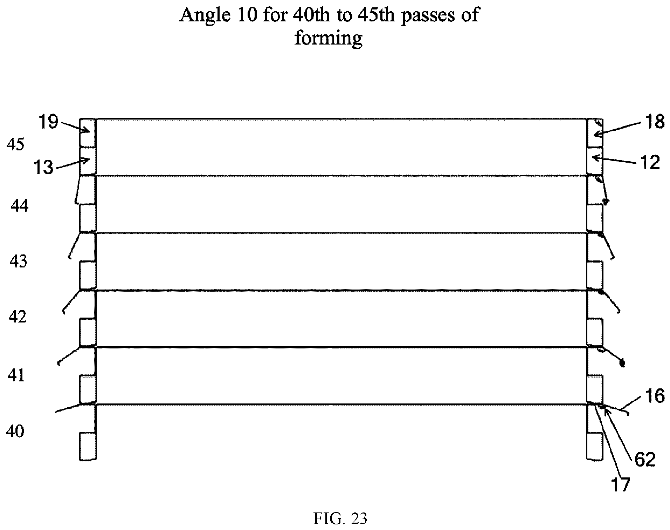

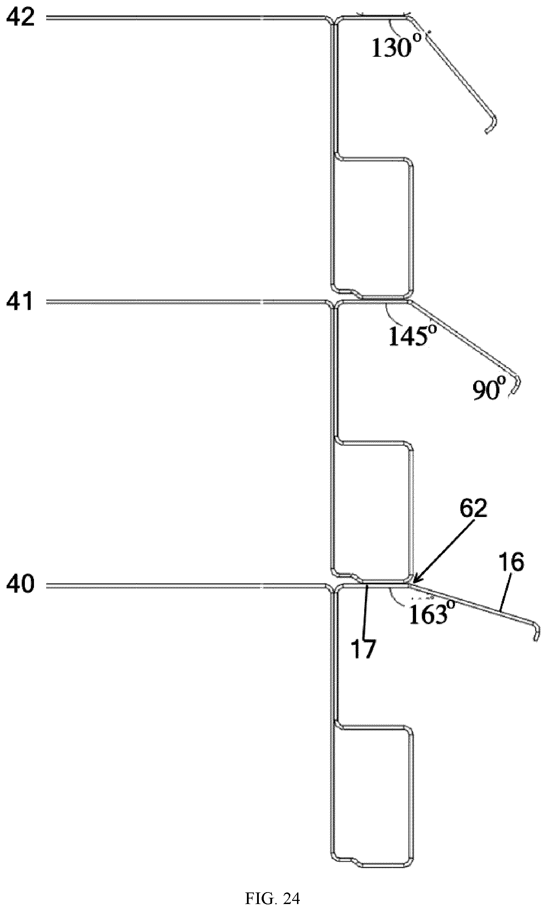

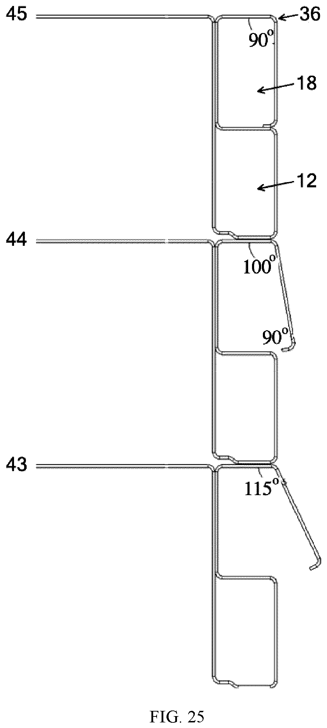

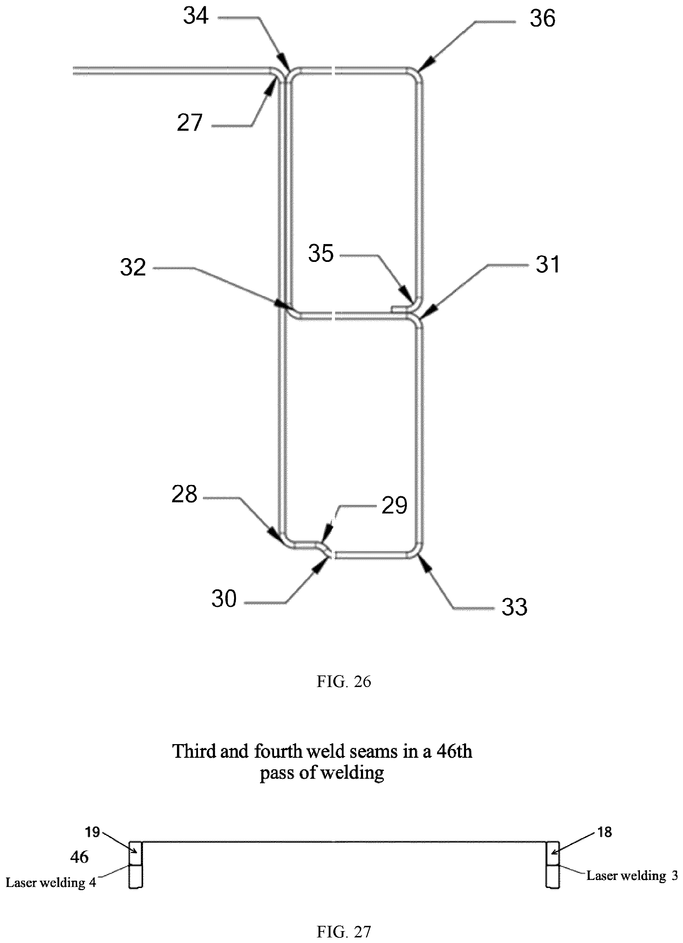

As shown in FIGS. 1 to 35, this embodiment provides a method for manufacturing a rollforming frame, including the following steps:
step 1: separately rolling and bending two opposite ends of a to-be-machined plate to separately form a first vertical wall 1 and a first horizontal wall 2 connected to each other at the two opposite ends of the to-be-machined plate, where a bottom plate 3 is formed between the two first vertical walls 1; a first bend structure 27 is formed between the first vertical wall 1 and the bottom plate 3, and a second bend structure 28 is formed between the first horizontal wall 2 and the first vertical wall 1; and the step 1 specifically includes the following steps:
   step 1.1: separately rolling and bending the two opposite ends of the to-be-machined plate to form a first side edge structure 20 and a second side edge structure 21 at the two opposite ends of the to-be-machined plate respectively, where the bottom plate 3 is formed between the first side edge structure 20 and the second side edge structure 21, a first corner structure is formed between the first side edge structure 20 and the bottom plate 3, and a first corner structure 53 is formed between the second side edge structure 21 and the bottom plate 3;
   step 1.2: separately rolling and bending the first side edge structure 20 and the second side edge structure 21 to form the first vertical wall 1 and the first horizontal wall 2, where a second corner structure 54 is formed between the first vertical wall 1 and the first horizontal wall 2; and
   step 1.3: rolling and bending the first vertical wall 1 and the first horizontal wall 2 for multiple times, gradually reducing an angle of the first corner structure 53 to form the first bend structure 27, and gradually reducing an angle of the second corner structure 54 to form the second bend structure 28,
   where in the step 1.1, the angle of the first corner structure 53 is 177°;
   in the step 1.2, the angle of the first corner structure 53 is 170°, and the angle of the second corner structure 54 is 172°; and
   the step 1.3 specifically includes the following steps:
      step 1.3.1: rolling and bending the first vertical wall 1 and the first horizontal wall 2, such that the angle of the first corner structure 53 is 160°, and the angle of the second corner structure 54 is 162°;
      step 1.3.2: rolling and bending the first vertical wall 1 and the first horizontal wall 2, such that the angle of the first corner structure 53 is 145°, and the angle of the second corner structure 54 is 148°;
      step 1.3.3: rolling and bending the first vertical wall 1 and the first horizontal wall 2, such that the angle of the first corner structure 53 is 130°, and the angle of the second corner structure 54 is 132°;
      step 1.3.4: rolling and bending the first vertical wall 1 and the first horizontal wall 2, such that the angle of the first corner structure 53 is 115°, and the angle of the second corner structure 54 is 118°;
      step 1.3.5: rolling and bending the first vertical wall 1 and the first horizontal wall 2, such that the angle of the first corner structure 53 is 100°, and the angle of the second corner structure 54 is 103°;
      step 1.3.6: rolling and bending the first vertical wall 1 and the first horizontal wall 2, such that the angle of the first corner structure 53 is 90°, the first bend structure 27 is formed, and the angle of the second corner structure 54 is 93°; and
      step 1.3.7: rolling and bending the first horizontal wall 2, such that the angle of the second corner structure 54 is 90°, and the second bend structure 28 is formed;
step 2: rolling and bending one end of the first horizontal wall 2 adjacent to the first vertical wall 1 to form a stepped bent structure 4, where a third bend structure 29 and a fourth bend structure 30 are formed in the stepped bent structure 4; and the step 2 specifically includes the following steps:
   step 2.1: rolling and bending one end of the first horizontal wall 2 adjacent to the first vertical wall 1 to form a stepped planar structure 22 and a third side edge structure 23, where a third corner structure 55 is formed between the stepped planar structure 22 and the third side edge structure 23;
   step 2.2: rolling and bending the third side edge structure 23 to form a stepped inclined surface structure 24 and a fourth side edge structure 25, where the third corner structure 55 is formed between the stepped planar structure 22 and the stepped inclined surface structure 24, and a fourth corner structure 56 is formed between the stepped inclined surface structure 24 and the fourth side edge structure 25; and
   step 2.3: rolling and bending the fourth side edge structure 25 and the stepped inclined surface structure 24 for multiple times, gradually increasing an angle of the third corner structure 55 to form the third bend structure 29, and gradually increasing an angle of the fourth corner structure 56 to form the fourth bend structure 30,
   where in the step 2.1, the angle of the third corner structure 55 is 3°;
   in the step 2.2, the angle of the third corner structure 55 is 15° and the angle of the fourth corner structure 56 is 13°; and
   the step 2.3 specifically includes the following steps:
      step 2.3.1: rolling and bending the fourth side edge structure 25 and the stepped inclined surface structure 24, such that the angle of the third corner structure 55 is 30° and the angle of the fourth corner structure 56 is 28°;
      step 2.3.2: rolling and bending the fourth side edge structure 25 and the stepped inclined surface structure 24, such that the angle of the third corner structure 55 is 45° and the angle of the fourth corner structure 56 is 42°;
      step 2.3.3: rolling and bending the fourth side edge structure 25 and the stepped inclined surface structure 24, such that the angle of the third corner structure 55 is 54°, the third bend structure 29 is formed, and the angle of the fourth corner structure 56 is 52°; and
      step 2.3.4: rolling and bending the fourth side edge structure 25, such that the angle of the fourth corner structure 56 is 54° and the fourth bend structure 30 is formed;
step 3: rolling and bending the first horizontal wall 2 to form a second vertical wall 5, a second horizontal wall 6, and a third horizontal wall 7 that are connected, where two ends of the second horizontal wall 6 are connected to the stepped bent structure 4 and the second vertical wall 5 respectively, a fifth bend structure 31 is formed between the second horizontal wall 6 and the second vertical wall 5, and a sixth bend structure 32 is formed between the second vertical wall 5 and the third horizontal wall 7; and the step 3 specifically includes the following steps:
   step 3.1: rolling and bending the first horizontal wall 2 to form the second horizontal wall 6 and a fifth side edge structure 26, where a fifth corner structure 57 is formed between the second horizontal wall 6 and the fifth side edge structure 26;
   step 3.2: rolling and bending the fifth side edge structure 26 to form the second vertical wall 5 and the third horizontal wall 7, where the fifth corner structure 57 is formed between the second horizontal wall 6 and the second vertical wall 5, and a sixth corner structure 58 is formed between the second vertical wall 5 and the third horizontal wall 7; and
   step 3.3: rolling and bending the second vertical wall 5 and the third horizontal wall 7 for multiple times, gradually reducing an angle of the fifth corner structure 57 to form the fifth bend structure 31, and gradually reducing an angle of the sixth corner structure 58 to form the sixth bend structure 32,
   where in the step 3.1, the angle of the fifth corner structure 57 is 176°;
   in the step 3.2, the angle of the fifth corner structure 57 is 165° and the angle of the sixth corner structure 58 is 170°; and
   the step 3.3 specifically includes the following steps:
      step 3.3.1: rolling and bending the second vertical wall 5 and the third horizontal wall 7, such that the angle of the fifth corner structure 57 is 150°, and the angle of the sixth corner structure 58 is 155°;
      step 3.3.2: rolling and bending the second vertical wall 5 and the third horizontal wall 7, such that the angle of the fifth corner structure 57 is 135°, and the angle of the sixth corner structure 58 is 140°;
      step 3.3.3: rolling and bending the second vertical wall 5 and the third horizontal wall 7, such that the angle of the fifth corner structure 57 is 120°, and the angle of the sixth corner structure 58 is 125°;
      step 3.3.4: rolling and bending the second vertical wall 5 and the third horizontal wall 7, such that the angle of the fifth corner structure 57 is 105°, and the angle of the sixth corner structure 58 is 110°;
      step 3.3.5: rolling and bending the second vertical wall 5 and the third horizontal wall 7, such that the angle of the fifth corner structure 57 is 90°, the fifth bend structure 31 is formed, and the angle of the sixth corner structure 58 is 95°; and
      step 3.3.6: rolling and bending the third horizontal wall 7, such that the angle of the sixth corner structure 58 is 90°, and the angle of the sixth bend structure 32 is formed;
step 4: rolling and bending the second horizontal wall 6 to form a third vertical wall 8 and a fourth horizontal wall 9 connected to each other; and rolling and bending the third horizontal wall 7 to form a fourth vertical wall 10 and a fifth horizontal wall 11 connected to each other, where the fourth vertical wall 10 abuts against the first vertical wall 1; a seventh bend structure 33 is formed between the third vertical wall 8 and the fourth horizontal wall 9, and two ends of the fourth horizontal wall 9 are connected to the stepped bent structure 4 and the third vertical wall 8 respectively; an eighth bend structure 34 is formed between the fourth vertical wall 10 and the fifth horizontal wall 11, and two ends of the fourth vertical wall 10 are connected to the fifth horizontal wall 11 and the second vertical wall 5 respectively; and the step 4 specifically includes the following steps:
   step 4.1: rolling and bending the second horizontal wall 6 to form the third vertical wall 8 and the fourth horizontal wall 9, where a seventh corner structure 59 is formed between the third vertical wall 8 and the fourth horizontal wall 9;
   step 4.2: rolling and bending the third vertical wall 8, and reducing an angle of the seventh corner structure 59 for the first time;
   step 4.3: rolling the third horizontal wall 7 to form the fourth vertical wall 10 and the fifth horizontal wall 11, where an eighth corner structure 60 is formed between the fourth vertical wall 10 and the fifth horizontal wall 11; and rolling and bending the third vertical wall 8, and reducing the angle of the seventh corner structure 59 for the second time; and
   step 4.4: rolling and bending the fifth horizontal wall 11 and the third vertical wall 8 for multiple times, gradually reducing the angle of the seventh corner structure 59 to form the seventh bend structure 33, and gradually reducing an angle of the eighth corner structure 60 to form the eighth bend structure 34,
   where in the step 4.1, the angle of the seventh corner structure 59 is 175°;
   in the step 4.2, the angle of the seventh corner structure 59 is 170°;
   in the step 4.3, the angle of the seventh corner structure 59 is 160°, and the angle of the eighth corner structure 60 is 170°; and
   the step 4.4 specifically includes the following steps:
      step 4.4.1: rolling and bending the fifth horizontal wall 11 and the third vertical wall 8, such that the angle of the seventh corner structure 59 is 150°, and the angle of the eighth corner structure 60 is 160°;
      step 4.4.2: rolling and bending the fifth horizontal wall 11 and the third vertical wall 8, such that the angle of the seventh corner structure 59 is 140°, and the angle of the eighth corner structure 60 is 150°;
      step 4.4.3: rolling and bending the fifth horizontal wall 11 and the third vertical wall 8, such that the angle of the seventh corner structure 59 is 130°, and the angle of the eighth corner structure 60 is 140°;
      step 4.4.4: rolling and bending the fifth horizontal wall 11 and the third vertical wall 8, such that the angle of the seventh corner structure 59 is 120°, and the angle of the eighth corner structure 60 is 130°;
      step 4.4.5: rolling and bending the fifth horizontal wall 11 and the third vertical wall 8, such that the angle of the seventh corner structure 59 is 110°, and the angle of the eighth corner structure 60 is 120°;
      step 4.4.6: rolling and bending the fifth horizontal wall 11 and the third vertical wall 8, such that the angle of the seventh corner structure 59 is 100°, and the angle of the eighth corner structure 60 is 110°;
      step 4.4.7: rolling and bending the fifth horizontal wall 11 and the third vertical wall 8, such that the angle of the seventh corner structure 59 is 90°, the seventh bend structure 33 is formed, and the angle of the eighth corner structure 60 is 100°; and
      step 4.4.8: rolling and bending the fifth horizontal wall 11, such that the angle of the eighth corner structure 60 is 90°, and the eighth bend structure 34 is formed;
step 5: performing laser welding on a joint of the fourth vertical wall 10 and the first vertical wall 1, where the second vertical wall 5, the third vertical wall 8, the fourth horizontal wall 9, and the first vertical wall 1 form a first cavity 12 and a second cavity 13;
step 6: rolling and bending one end of the fifth horizontal wall 11 away from the fourth vertical wall 10 to form a connecting edge 14 and a sixth horizontal wall 15 connected to each other, where a ninth corner structure 35 is formed between the connecting edge 14 and the sixth horizontal wall 15; and the step 6 specifically includes the following steps:
   step 6.1: rolling and bending one end of the fifth horizontal wall 11 away from the fourth vertical wall 10 to form the connecting edge 14 and the sixth horizontal wall 15, where a ninth corner structure 61 is formed between the connecting edge 14 and the sixth horizontal wall 15; and
   step 6.2: rolling and bending the connecting edge 14 for multiple times, and gradually reducing an angle of the ninth corner structure 61 to form the ninth bend structure 35,
   where in the step 6.1, the angle of the ninth corner structure 61 is 180°; and
   the step 6.2 specifically includes the following steps:
      step 6.2.1: rolling and bending the connecting edge 14, such that the angle of the ninth corner structure 61 is 150°;
      step 6.2.2: rolling and bending the connecting edge 14, such that the angle of the ninth corner structure 61 is 120°; and
      step 6.2.3: rolling and bending the connecting edge 14, such that the angle of the ninth corner structure 61 is 90°, and the ninth bend structure 35 is formed;
step 7: rolling and bending the sixth horizontal wall 15 to form a fifth vertical wall 16 and a seventh horizontal wall 17 connected to each other, where the connecting edge 14 abuts against the second vertical wall 5; a tenth bend structure 36 is formed between the fifth vertical wall 16 and the seventh horizontal wall 17, and two ends of the fifth vertical wall 16 are connected to the seventh horizontal wall 17 and the connecting edge 14 respectively; and the step 7 specifically includes the following steps:
   step 7.1: rolling and bending the sixth horizontal wall 15 to form the fifth vertical wall 16 and the seventh horizontal wall 17, where a tenth corner structure 62 is formed between the fifth vertical wall 16 and the seventh horizontal wall 17; and
   step 7.2: rolling and bending the fifth vertical wall 16 for multiple times, and gradually reducing an angle of the tenth corner structure 62 to form the tenth bend structure 36,
   where in the step 7.1, the angle of the tenth corner structure 62 is 163°; and
   the step 7.2 specifically includes the following steps:
      step 7.2.1: rolling and bending the fifth vertical wall 16, such that the angle of the tenth corner structure 62 is 145°;
      step 7.2.2: rolling and bending the fifth vertical wall 16, such that the angle of the tenth corner structure 62 is 130°;
      step 7.2.3: rolling and bending the fifth vertical wall 16, such that the angle of the tenth corner structure 62 is 115°;
      step 7.2.4: rolling and bending the fifth vertical wall 16, such that the angle of the tenth corner structure 62 is 100°; and
      step 7.2.5: rolling and bending the fifth vertical wall 16, such that the angle of the tenth corner structure 62 is 90°, and the tenth bend structure 36 is formed;
step 8: performing laser welding on a joint of the connecting edge 14 and the second vertical wall 5, where the fourth vertical wall 10, the fifth vertical wall 16, the seventh horizontal wall 17, and the second vertical wall 5 form a third cavity 18 and a fourth cavity 19, where a left longitudinal beam portion 49 and a right longitudinal beam portion 50 are formed at the two opposite ends of the bottom plate 3.

The method for manufacturing a rollforming frame further includes the following steps:
step 9: cutting the left longitudinal beam portion 49 and the right longitudinal beam portion 50 that are located at four corners of the bottom plate 3 to form a front longitudinal beam plate 37 and a rear longitudinal beam plate 38 at another two opposite ends of the bottom plate 3;
step 10: separately bending the front longitudinal beam plate 37 and the rear longitudinal beam plate 38 to form a sixth vertical wall 39 and an eighth horizontal wall 40, where an eleventh bend structure 41 is formed between the sixth vertical wall 39 and the eighth horizontal wall 40;
step 11: bending the eighth horizontal wall 40 to form a seventh vertical wall 42 and a ninth horizontal wall 43, where a twelfth bend structure 44 is formed between the seventh vertical wall 42 and the ninth horizontal wall 43;
step 12: bending the seventh vertical wall 42 to form an eighth vertical wall 45 and a tenth horizontal wall 46, where a thirteenth bend structure 47 is formed between the eighth vertical wall 45 and the tenth horizontal wall 46;
step 13: bending the ninth horizontal wall 43, such that the sixth vertical wall 39 abuts against the bottom plate 3, a fourteenth bend structure 48 is formed between the ninth horizontal wall 43 and the bottom plate 3, and a front longitudinal beam portion 51 and a rear longitudinal beam portion 52 are formed at the another two opposite ends of the bottom plate 3; and
step 14: welding a joint of the front longitudinal beam portion 51 and the left longitudinal beam portion 49, welding a joint of the front longitudinal beam portion 51 and the right longitudinal beam portion 50, welding a joint of the rear longitudinal beam portion 52 and the left longitudinal beam portion 49, welding a joint of the rear longitudinal beam portion 52 and the right longitudinal beam portion 50, and welding a joint of the sixth vertical wall 39 and the bottom plate 3.

This embodiment further provides a rollforming frame manufactured using the above method for manufacturing a rollforming frame.

The rollforming frame provided in this embodiment includes a bottom plate 3, a left longitudinal beam portion 49, and a right longitudinal beam portion 50, where the left longitudinal beam portion 49 and the right longitudinal beam portion 50 are disposed at two opposite ends of the bottom plate 3 respectively; each of the left longitudinal beam portion 49 and the right longitudinal beam portion 50 includes the first vertical wall 1, the fourth horizontal wall 9, the third vertical wall 8, the second vertical wall 5, the fourth vertical wall 10, the seventh horizontal wall 17, the fifth vertical wall 16, and the connecting edge 14 that are sequentially connected, the fourth horizontal wall 9, the third vertical wall 8, and the second vertical wall 5 form a first notch structure, the second vertical wall 5, the fourth vertical wall 10, and the seventh horizontal wall 17 form a second notch structure, the first vertical wall 1 is connected to an opening end of the first notch structure, the fourth vertical wall 10 is connected to the first vertical wall 1, the fifth vertical wall 16 is connected to an opening end of the second notch structure, and the connecting edge 14 is connected to one end of the second vertical wall 5 adjacent to the third vertical wall 8.

In this embodiment, a high-strength steel strip is used as a raw material, each of two sides of the steel strip is designed to be provided with a special-shaped cavity in a rectangular shape with a vertical line in the middle, the middle of the cavity is provided with a bottom structure that is a steel plate, and the cavities in the two sides and the bottom structures are integrally formed, where the cavity is laser-welded and a machining technology is roll forming.

On the basis of the above integrally rolled profile, the steel plates at front and rear ends are machined using a bending technology to form predetermined cavities, then a joint is welded, and finally an integrally formed frame is formed.

### Embodiment 2:

Those skilled in the art can understand this embodiment as a more specific description of Embodiment 1.

This embodiment provides a method for manufacturing a rollforming frame. High-strength steel with the strength of 600 MPa or above is used as a material to achieve light weight of the material.

According to the manufacturing method in this embodiment, a steel strip passes through a roll forming mold; then, a plurality of cavities are formed on a left side and a right side of the steel strip by rolling respectively; the cavities are connected as a whole by the steel strip to serve as a bottom plate of a battery frame, where the left and right cavities are longitudinal beams, configured to support the frame and prevent collision; front and rear steel strips are formed into front and rear single-cavity transverse beams through a bending technology; and finally welding is performed to form the integrally rolled battery frame.

The manufacturing method in this embodiment includes the following steps.

In 1st to 9th passes,
two vertical walls are gradually formed by a roller, two horizontal plates are distributed in a left-right manner, a lower steel strip is formed into a bottom plate, two sides of the bottom plate are connected, and finally a "hat" shape is formed;
left and right bends 1# are formed, and optimal angles for the 1st to 8th passes are 177°, 170°, 160°, 145°, 130°, 115°, 100°, and 90° in sequence; and
left and right bends 2# are formed, and optimal angles for the 2nd to 9th passes are 172°, 162°, 148°, 132°, 118°, 103°, 93°, and 90° in sequence.

In 10th to 15th passes,
the left and right horizontal plates are gradually rollformed by the roller, and finally a stepped structure is formed;
left and right bends 3# are formed, and optimal angles for the 10th to 14th passes are 3°, 15°, 30°, 45°, and 54° in sequence;
left and right bends 4# are formed, and optimal angles for the 11st to 15th passes are 13°, 28°, 42°, 52°, and 54° in sequence; and
a step can be formed after bending by the roller, has the optimal height of 2 mm, and is configured to mount a sealing strip and/or a sealing adhesive.

In 16th to 23rd passes,
the left and right horizontal plates continue being rollforming by the roller, and finally left and right second vertical walls and second horizontal walls are formed;
left and right bends 5# are formed, and optimal angles for the 16th to 22nd passes are 176°, 165°, 150°, 135°, 120°, 105°, and 90° in sequence; and
left and right bends 6# are formed, and optimal angles for the 17th to 23rd passes are 170°, 155°, 140°, 125°, 110°, 95°, and 90° in sequence.

In 24th to 34th passes,
horizontal edges between the step and the second vertical walls are gradually rollformed and bent by the roller, and the second horizontal edges continue being rollformed and bent, where the second horizontal edges are bent by 90° and then are in contact with first vertical walls to form a first cavity and a second cavity;
left and right bends 7# are formed, and optimal angles for the 24th to 33rd passes are 175°, 170°, 160°, 150°, 140°, 130°, 120°, 110°, 100°, and 90° in sequence; and
left and right bends 8# are formed, and optimal angles for the 26th to 34th passes are 170°, 160°, 150°, 140°, 130°, 120°, 110°, 100°, and 90° in sequence.

In a 35th pass of welding,
contact parts between the left and right second horizontal edges and the left and right first vertical walls are gradually laser-welded by the roller to form a first cavity and a second cavity that are closed, and steel plates are formed as a whole, thereby ensuring the structural stability, strength and stiffness.

In 36th to 39th passes,
the left and right second horizontal edges continue being gradually rollformed and bent by the roller, and a small weld edge is formed; and
left and right bends 9# are formed, and optimal angles for the 36th to 39th passes are 180°, 150°, 120°, and 90° in sequence.

**In** 40th to 45th passes,
the left and right second horizontal edges and the small weld edge continue to be gradually rollformed and bent by the roller, and a bend 10# is formed; and
left and right bends 10# are formed, and optimal angles for the 40th to 45th passes are 163°, 145°, 130°, 115°, 100°, and 90° in sequence.

**In** a 46th pass of welding,
contact parts between the left and right second horizontal edges and left and right small weld edges are gradually laser-welded by the roller to form a third cavity and a fourth cavity that are closed, steel plates are formed as a whole, and forming of a total of four cavities is completed, thereby ensuring the structural stability, strength and stiffness.

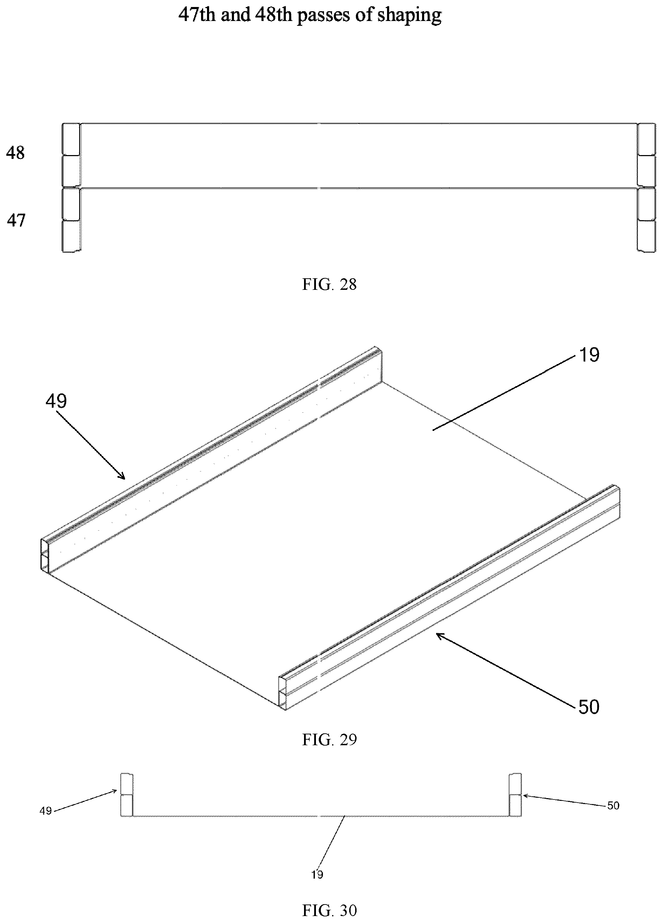

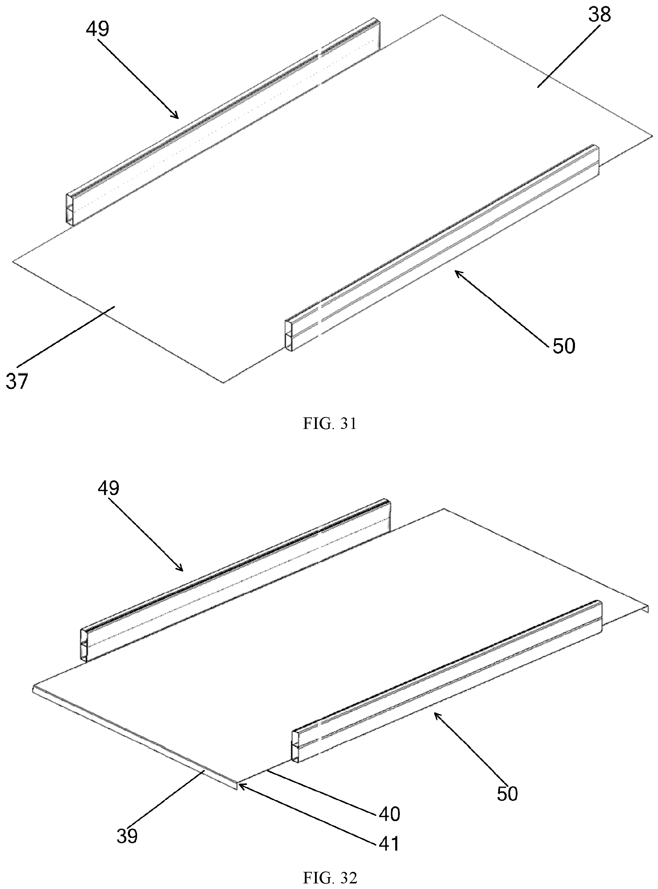

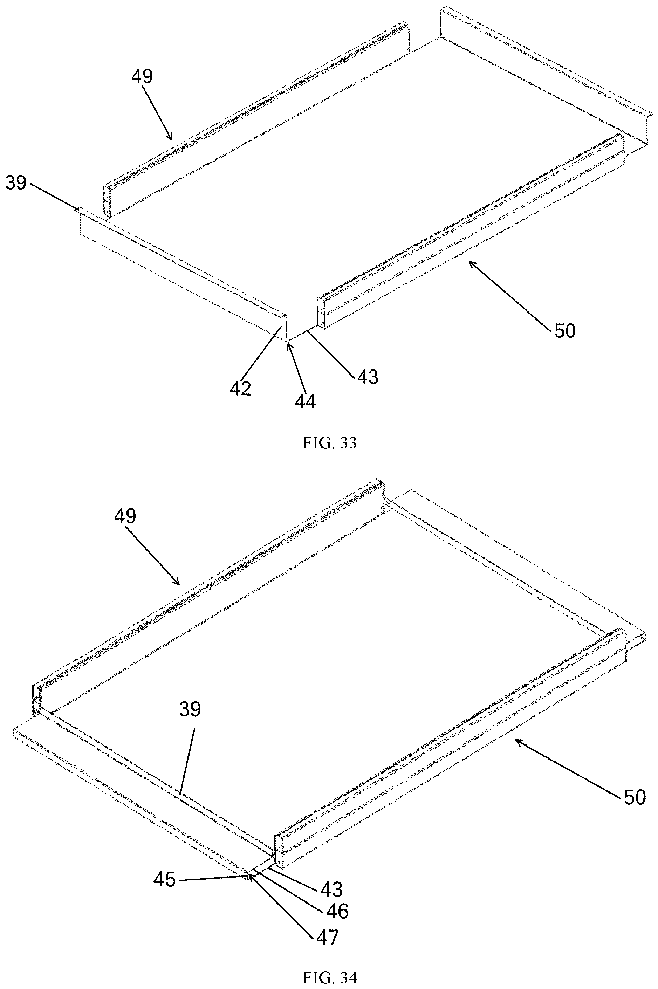

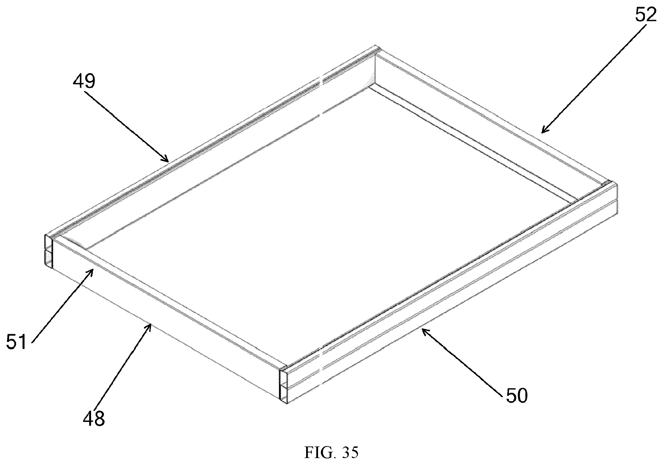

FIG. 29 is a schematic diagram of the product. As shown in FIG. 31, four corners of an integrally rollforming profile are cut. As shown in FIG. 32, front and rear parts of a bottom plate are bent downwards at an angle of 90° by a small edge through a bending technology. As shown in FIG. 33, front and rear parts of a bottom plate are bent upwards at an angle of 90° by a vertical edge through a bending technology. As shown in FIG. 34, front and rear parts of a bottom plate are bent upwards at an angle of 90° by a horizontal edge through a bending technology. As shown in FIG. 35, front and rear parts of a bottom plate are bent upwards at an angle of 90° by a vertical edge through a bending technology. **In** this way, a frame is formed finally.

The periphery of the frame is welded using a welding technology to form a whole, thereby ensuring the structural integrity, stability and performance requirements of the entire frame.

**In** the technological process, the offline butt-welding step is canceled, which reduces equipment investment and labor input, significantly reduces equipment investment, factory investment, and machining costs, and creates huge economic benefits.

According to the present invention, an advanced roll forming technology is used for online integral forming, during which there are good product quality and high production stability and efficiency.

In the description of this application, it is to be understood that the orientations or positional relationships indicated by the terms "upper", "lower", "front", "rear", "left", "right", "vertical", "horizontal", "top", "bottom", "inside", "outside", etc. are based on the orientations or positional relationships shown in the accompanying drawings, only for the convenience of describing the present application and simplifying the description rather than indicating or implying that the apparatus or element referred to must have a particular orientation or be constructed and operated in a particular orientation, and therefore cannot be construed as limitations to the present application.

Compared with the prior art, the present invention has the following beneficial effects:
1. According to the manufacturing method in the present invention, the high-strength steel is selected, and the advanced roll forming technology is used for online integral forming, during which there are good product quality and high production stability and efficiency.
2. According to the manufacturing method in the present invention, there are no subsequent steel plate butt-welding and laser hole-cutting steps, thereby reducing personnel and equipment investment, avoiding increasing energy consumption during production, and lowering costs.
3. According to the manufacturing method in the present invention, five types of materials are reduced to one type of material, thereby reducing material types and procurement cycles and costs.
4. In terms of the profile structure prepared in the present invention, the longitudinal beams around the frame are rollformed once, the front and rear beams are bent, then the frame is butt-welded, and the bottom plate and the frame are integrally formed, which reduces welding steps and welding amount, and improves the forming accuracy. The integrity of the frame ensures the overall strength and stiffness of the structure, and improves the anti-collision performance of the structure.

The specific embodiments of the present invention are described above. It is to be understood that the present invention is not limited to the specific embodiments described above, and various changes or modifications may be made by those skilled in the art within the scope of the claims.

## Claims

1. A method for manufacturing a rollforming frame, comprising the following steps:
step 1: separately rolling and bending two opposite ends of a to-be-machined plate to separately form a first vertical wall (1) and a first horizontal wall (2) connected to each other at the two opposite ends of the to-be-machined plate, wherein a bottom plate (3) is formed between two first vertical walls (1);
step 2: for each of the two opposite ends of the bottom plate (3), rolling and bending an end of the first horizontal wall (2) adjacent to the first vertical wall (1) to form a stepped bent structure (4);
step 3: for each of the two opposite ends of the bottom plate (3), rolling and bending the first horizontal wall (2) to form a second vertical wall (5), a second horizontal wall (6), and a third horizontal wall (7) that are connected;
step 4: for each of the two opposite ends of the bottom plate (3), rolling and bending the second horizontal wall (6) to form a third vertical wall (8) and a fourth horizontal wall (9) connected to each other; and rolling and bending the third horizontal wall (7) to form a fourth vertical wall (10) and a fifth horizontal wall (11) connected to each other, wherein the fourth vertical wall (10) abuts against the first vertical wall (1);
step 5: for each of the two opposite ends of the bottom plate (3), performing laser welding on a joint of the fourth vertical wall (10) and the first vertical wall (1), wherein the second vertical wall (5), the third vertical wall (8), the fourth horizontal wall (9), and the first vertical wall (1) form a first cavity (12) and a second cavity (13), respectively, at the two opposite ends of the bottom plate (3);
step 6: for each of the two opposite ends of the bottom plate (3), rolling and bending an end of the fifth horizontal wall (11) away from the fourth vertical wall (10) to form a connecting edge (14) and a sixth horizontal wall (15) connected to each other;
step 7: for each of the two opposite ends of the bottom plate (3), rolling and bending the sixth horizontal wall (15) to form a fifth vertical wall (16) and a seventh horizontal wall (17) connected to each other, wherein the connecting edge (14) abuts against the second vertical wall (5); and
step 8: for each of the two opposite ends of the bottom plate (3), performing laser welding on a joint of the connecting edge (14) and the second vertical wall (5), wherein the fourth vertical wall (10), the fifth vertical wall (16), the seventh horizontal wall (17), and the second vertical wall (5) form a third cavity (18) and a fourth cavity (19), respectively, at the two opposite ends of the bottom plate (3).

2. The method for manufacturing the rollforming frame according to claim 1, wherein in the step 1, a first bend structure (27) is formed between the first vertical wall (1) and the bottom plate (3), and a second bend structure (28) is formed between the first horizontal wall (2) and the first vertical wall (1);
in the step 2, a third bend structure (29) and a fourth bend structure (30) are formed in the stepped bent structure (4);
in the step 3, two ends of the second horizontal wall (6) are connected to the stepped bent structure (4) and the second vertical wall (5) respectively, a fifth bend structure (31) is formed between the second horizontal wall (6) and the second vertical wall (5), and a sixth bend structure (32) is formed between the second vertical wall (5) and the third horizontal wall (7);
in the step 4, a seventh bend structure (33) is formed between the third vertical wall (8) and the fourth horizontal wall (9), and two ends of the fourth horizontal wall (9) are connected to the stepped bent structure (4) and the third vertical wall (8) respectively;
an eighth bend structure (34) is formed between the fourth vertical wall (10) and the fifth horizontal wall (11), and two ends of the fourth vertical wall (10) are connected to the fifth horizontal wall (11) and the second vertical wall (5) respectively;
in the step 6, a ninth bend structure (35) is formed between the connecting edge (14) and the sixth horizontal wall (15); and
in the step 7, a tenth bend structure (36) is formed between the fifth vertical wall (16) and the seventh horizontal wall (17), and two ends of the fifth vertical wall (16) are connected to the connecting edge (14) and the seventh horizontal wall (17) respectively.

3. The method for manufacturing the rollforming frame according to claim 2, wherein the step 1 specifically comprises the following steps:
step 1.1: separately rolling and bending the two opposite ends of the to-be-machined plate to form a first side edge structure (20) and a second side edge structure (21) at the two opposite ends of the to-be-machined plate respectively, wherein the bottom plate (3) is formed between the first side edge structure (20) and the second side edge structure (21), a first corner structure (53) is formed between the first side edge structure (20) and the bottom plate (3), and the first corner structure (53) is formed between the second side edge structure (21) and the bottom plate (3);
step 1.2: separately rolling and bending the first side edge structure (20) and the second side edge structure (21) to form the first vertical wall (1) and the first horizontal wall (2), wherein a second corner structure (54) is formed between the first vertical wall (1) and the first horizontal wall (2); and
step 1.3: rolling and bending the first vertical wall (1) and the first horizontal wall (2) for multiple times, gradually reducing an angle of the first corner structure (53) to form the first bend structure (27), and gradually reducing an angle of the second corner structure (54) to form the second bend structure (28).

4. The method for manufacturing the rollforming frame according to claim 3, wherein in the step 1.1, the angle of the first corner structure (53) is 177°;
in the step 1.2, the angle of the first corner structure (53) is 170°, and the angle of the second corner structure (54) is 172°; and
the step 1.3 specifically comprises the following steps:
step 1.3.1: rolling and bending the first vertical wall (1) and the first horizontal wall (2), such that the angle of the first corner structure (53) is 160°, and the angle of the second corner structure (54) is 162°;
step 1.3.2: rolling and bending the first vertical wall (1) and the first horizontal wall (2), such that the angle of the first corner structure (53) is 145°, and the angle of the second corner structure (54) is 148°;
step 1.3.3: rolling and bending the first vertical wall (1) and the first horizontal wall (2), such that the angle of the first corner structure (53) is 130°, and the angle of the second corner structure (54) is 132°;
step 1.3.4: rolling and bending the first vertical wall (1) and the first horizontal wall (2), such that the angle of the first corner structure (53) is 115°, and the angle of the second corner structure (54) is 118°;
step 1.3.5: rolling and bending the first vertical wall (1) and the first horizontal wall (2), such that the angle of the first corner structure (53) is 100°, and the angle of the second corner structure (54) is 103°;
step 1.3.6: rolling and bending the first vertical wall (1) and the first horizontal wall (2), such that the angle of the first corner structure (53) is 90°, the first bend structure (27) is formed, and the angle of the second corner structure (54) is 93°; and
step 1.3.7: rolling and bending the first horizontal wall (2), such that the angle of the second corner structure (54) is 90°, and the second bend structure (28) is formed.

5. The method for manufacturing the rollforming frame according to claim 2, wherein the step 2 specifically comprises the following steps:
step 2.1: rolling and bending the end of the first horizontal wall (2) adjacent to the first vertical wall (1) to form a stepped planar structure (22) and a third side edge structure (23), wherein a third corner structure (55) is formed between the stepped planar structure (22) and the third side edge structure (23);
step 2.2: rolling and bending the third side edge structure (23) to form a stepped inclined surface structure (24) and a fourth side edge structure (25), wherein the third corner structure (55) is formed between the stepped planar structure (22) and the stepped inclined surface structure (24), and a fourth corner structure (56) is formed between the stepped inclined surface structure (24) and the fourth side edge structure (25); and
step 2.3: rolling and bending the fourth side edge structure (25) and the stepped inclined surface structure (24) for multiple times, gradually increasing an angle of the third corner structure (55) to form the third bend structure (29), and gradually increasing an angle of the fourth corner structure (56) to form the fourth bend structure (30).

6. The method for manufacturing the rollforming frame according to claim 5, wherein in the step 2.1, the angle of the third corner structure (55) is 3°;
in the step 2.2, the angle of the third corner structure (55) is 15° and the angle of the fourth corner structure (56) is 13°; and
the step 2.3 specifically comprises the following steps:
step 2.3.1: rolling and bending the fourth side edge structure (25) and the stepped inclined surface structure (24), such that the angle of the third corner structure (55) is 30° and the angle of the fourth corner structure (56) is 28°;
step 2.3.2: rolling and bending the fourth side edge structure (25) and the stepped inclined surface structure (24), such that the angle of the third corner structure (55) is 45° and the angle of the fourth corner structure (56) is 42°;
step 2.3.3: rolling and bending the fourth side edge structure (25) and the stepped inclined surface structure (24), such that the angle of the third corner structure (55) is 54°, the third bend structure (29) is formed, and the angle of the fourth corner structure (56) is 52°; and
step 2.3.4: rolling and bending the fourth side edge structure (25), such that the angle of the fourth corner structure (56) is 54° and the fourth bend structure (30) is formed.

7. The method for manufacturing the rollforming frame according to claim 2, wherein the step 3 specifically comprises the following steps:
step 3.1: rolling and bending the first horizontal wall (2) to form the second horizontal wall (6) and a fifth side edge structure (26), wherein a fifth corner structure (57) is formed between the second horizontal wall (6) and the fifth side edge structure (26);
step 3.2: rolling and bending the fifth side edge structure (26) to form the second vertical wall (5) and the third horizontal wall (7), wherein the fifth corner structure (57) is formed between the second horizontal wall (6) and the second vertical wall (5), and a sixth corner structure (58) is formed between the second vertical wall (5) and the third horizontal wall (7); and
step 3.3: rolling and bending the second vertical wall (5) and the third horizontal wall (7) for multiple times, gradually reducing an angle of the fifth corner structure (57) to form the fifth bend structure (31), and gradually reducing an angle of the sixth corner structure (58) to form the sixth bend structure (32).

8. The method for manufacturing the rollforming frame according to claim 7, wherein in the step 3.1, the angle of the fifth corner structure (57) is 176°;
in the step 3.2, the angle of the fifth corner structure (57) is 165° and the angle of the sixth corner structure (58) is 170°; and
the step 3.3 specifically comprises the following steps:
step 3.3.1: rolling and bending the second vertical wall (5) and the third horizontal wall (7), such that the angle of the fifth corner structure (57) is 150°, and the angle of the sixth corner structure (58) is 155°;
step 3.3.2: rolling and bending the second vertical wall (5) and the third horizontal wall (7), such that the angle of the fifth corner structure (57) is 135°, and the angle of the sixth corner structure (58) is 140°;
step 3.3.3: rolling and bending the second vertical wall (5) and the third horizontal wall (7), such that the angle of the fifth corner structure (57) is 120°, and the angle of the sixth corner structure (58) is 125°;
step 3.3.4: rolling and bending the second vertical wall (5) and the third horizontal wall (7), such that the angle of the fifth corner structure (57) is 105°, and the angle of the sixth corner structure (58) is 110°;
step 3.3.5: rolling and bending the second vertical wall (5) and the third horizontal wall (7), such that the angle of the fifth corner structure (57) is 90°, the fifth bend structure (31) is formed, and the angle of the sixth corner structure (58) is 95°; and
step 3.3.6: rolling and bending the third horizontal wall (7), such that the angle of the sixth corner structure (58) is 90°, and the sixth bend structure (32) is formed.

9. The method for manufacturing the rollforming frame according to claim 2, wherein the step 4 specifically comprises the following steps:
step 4.1: rolling and bending the second horizontal wall (6) to form the third vertical wall (8) and the fourth horizontal wall (9), wherein a seventh corner structure (59) is formed between the third vertical wall (8) and the fourth horizontal wall (9);
step 4.2: rolling and bending the third vertical wall (8), and reducing an angle of the seventh corner structure (59) for a first time;
step 4.3: rolling the third horizontal wall (7) to form the fourth vertical wall (10) and the fifth horizontal wall (11), wherein an eighth corner structure (60) is formed between the fourth vertical wall (10) and the fifth horizontal wall (11); and rolling and bending the third vertical wall (8), and reducing the angle of the seventh corner structure (59) for a second time; and
step 4.4: rolling and bending the fifth horizontal wall (11) and the third vertical wall (8) for multiple times, gradually reducing the angle of the seventh corner structure (59) to form the seventh bend structure (33), and gradually reducing an angle of the eighth corner structure (60) to form the eighth bend structure (34).

10. The method for manufacturing the rollforming frame according to claim 9, wherein in the step 4.1, the angle of the seventh corner structure (59) when formed is 175°;
in the step 4.2, the angle of the seventh corner structure (59) is 170°;
in the step 4.3, the angle of the seventh corner structure (59) is 160°, and the angle of the eighth corner structure (60) is 170°; and
the step 4.4 specifically comprises the following steps:
step 4.4.1: rolling and bending the fifth horizontal wall (11) and the third vertical wall (8), such that the angle of the seventh corner structure (59) is 150°, and the angle of the eighth corner structure (60) is 160°;
step 4.4.2: rolling and bending the fifth horizontal wall (11) and the third vertical wall (8), such that the angle of the seventh corner structure (59) is 140°, and the angle of the eighth corner structure (60) is 150°;
step 4.4.3: rolling and bending the fifth horizontal wall (11) and the third vertical wall (8), such that the angle of the seventh corner structure (59) is 130°, and the angle of the eighth corner structure (60) is 140°;
step 4.4.4: rolling and bending the fifth horizontal wall (11) and the third vertical wall (8), such that the angle of the seventh corner structure (59) is 120°, and the angle of the eighth corner structure (60) is 130°;
step 4.4.5: rolling and bending the fifth horizontal wall (11) and the third vertical wall (8), such that the angle of the seventh corner structure (59) is 110°, and the angle of the eighth corner structure (60) is 120°;
step 4.4.6: rolling and bending the fifth horizontal wall (11) and the third vertical wall (8), such that the angle of the seventh corner structure (59) is 100°, and the angle of the eighth corner structure (60) is 110°;
step 4.4.7: rolling and bending the fifth horizontal wall (11) and the third vertical wall (8), such that the angle of the seventh corner structure (59) is 90°, the seventh bend structure (33) is formed, and the angle of the eighth corner structure (60) is 100°; and
step 4.4.8: rolling and bending the fifth horizontal wall (11), such that the angle of the eighth corner structure (60) is 90°, and the eighth bend structure (34) is formed.

11. The method for manufacturing the rollforming frame according to claim 2, wherein the step 6 specifically comprises the following steps:
step 6.1: rolling and bending the end of the fifth horizontal wall (11) away from the fourth vertical wall (10) to form the connecting edge (14) and the sixth horizontal wall (15), wherein a ninth corner structure (61) is formed between the connecting edge (14) and the sixth horizontal wall (15); and
step 6.2: rolling and bending the connecting edge (14) for multiple times, and gradually reducing an angle of the ninth corner structure (61) to form the ninth bend structure (35).

12. The method for manufacturing the rollforming frame according to claim 11, wherein in the step 6.1, the angle of the ninth corner structure (61) is 180°; and
the step 6.2 specifically comprises the following steps:
step 6.2.1: rolling and bending the connecting edge (14), such that the angle of the ninth corner structure (61) is 150°;
step 6.2.2: rolling and bending the connecting edge (14), such that the angle of the ninth corner structure (61) is 120°; and
step 6.2.3: rolling and bending the connecting edge (14), such that the angle of the ninth corner structure (61) is 90°, and the ninth bend structure (35) is formed.

13. The method for manufacturing the rollforming frame according to claim 2, wherein the step 7 specifically comprises the following steps:
step 7.1: rolling and bending the sixth horizontal wall (15) to form the fifth vertical wall (16) and the seventh horizontal wall (17), wherein a tenth corner structure (62) is formed between the fifth vertical wall (16) and the seventh horizontal wall (17); and
step 7.2: rolling and bending the fifth vertical wall (16) for multiple times, and gradually reducing an angle of the tenth corner structure (62) to form the tenth bend structure (36).

14. The method for manufacturing the rollforming frame according to claim 13, wherein in the step 7.1, the angle of the tenth corner structure (62) is 163°; and
the step 7.2 specifically comprises the following steps:
step 7.2.1: rolling and bending the fifth vertical wall (16), such that the angle of the tenth corner structure (62) is 145°;
step 7.2.2: rolling and bending the fifth vertical wall (16), such that the angle of the tenth corner structure (62) is 130°;
step 7.2.3: rolling and bending the fifth vertical wall (16), such that the angle of the tenth corner structure (62) is 115°;
step 7.2.4: rolling and bending the fifth vertical wall (16), such that the angle of the tenth corner structure (62) is 100°; and
step 7.2.5: rolling and bending the fifth vertical wall (16), such that the angle of the tenth corner structure (62) is 90°, and the tenth bend structure (36) is formed.

15. The method for manufacturing the rollforming frame according to claim 2, wherein in the step 8, a left longitudinal beam portion (49) and a right longitudinal beam portion (50) are formed at two opposite ends of the bottom plate (3); and
the method for manufacturing the rollforming frame further comprises the following steps:
step 9: cutting the left longitudinal beam portion (49) and the right longitudinal beam portion (50) located at four corners of the bottom plate (3) to form a front longitudinal beam plate (37) and a rear longitudinal beam plate (38) at another two opposite ends of the bottom plate (3);
step 10: for each of the another two opposite ends of the bottom plate (3), separately bending the front longitudinal beam plate (37) and the rear longitudinal beam plate (38) to form a sixth vertical wall (39) and an eighth horizontal wall (40), wherein an eleventh bend structure (41) is formed between the sixth vertical wall (39) and the eighth horizontal wall (40);
step 11: for each of the another two opposite ends of the bottom plate (3), bending the eighth horizontal wall (40) to form a seventh vertical wall (42) and a ninth horizontal wall (43), wherein a twelfth bend structure (44) is formed between the seventh vertical wall (42) and the ninth horizontal wall (43);
step 12: for each of the another two opposite ends of the bottom plate (3), bending the seventh vertical wall (42) to form an eighth vertical wall (45) and a tenth horizontal wall (46), wherein a thirteenth bend structure (47) is formed between the eighth vertical wall (45) and the tenth horizontal wall (46);
step 13: for each of the another two opposite ends of the bottom plate (3), bending the ninth horizontal wall (43), such that the sixth vertical wall (39) abuts against the bottom plate (3), a fourteenth bend structure (48) is formed between the ninth horizontal wall (43) and the bottom plate (3), and a front longitudinal beam portion (51) and a rear longitudinal beam portion (52) are respectively formed at the another two opposite ends of the bottom plate (3); and
step 14: welding a joint of the front longitudinal beam portion (51) and the left longitudinal beam portion (49), welding a joint of the front longitudinal beam portion (51) and the right longitudinal beam portion (50), welding a joint of the rear longitudinal beam portion (52) and the left longitudinal beam portion (49), welding a joint of the rear longitudinal beam portion (52) and the right longitudinal beam portion (50), and welding a joint of the sixth vertical wall (39) and the bottom plate (3).

16. A rollforming frame, manufactured using the method for manufacturing the rollforming frame according to any one of claims 1 to 15, comprising a bottom plate (3), a left longitudinal beam portion (49), and a right longitudinal beam portion (50), wherein the left longitudinal beam portion (49) and the right longitudinal beam portion (50) are disposed at two opposite ends of the bottom plate (3) respectively;
each of the left longitudinal beam portion (49) and the right longitudinal beam portion (50) comprises the first vertical wall (1), the fourth horizontal wall (9), the third vertical wall (8), the second vertical wall (5), the fourth vertical wall (10), the seventh horizontal wall (17), the fifth vertical wall (16), and the connecting edge (14) that are sequentially connected;
the fourth horizontal wall (9), the third vertical wall (8), and the second vertical wall (5) form a first notch structure, and the second vertical wall (5), the fourth vertical wall (10), and the seventh horizontal wall (17) form a second notch structure;
the first vertical wall (1) is connected to an opening end of the first notch structure, and the fourth vertical wall (10) is connected to the first vertical wall (1); and
the fifth vertical wall (16) is connected to an opening end of the second notch structure, and the connecting edge (14) is connected to an end of the second vertical wall (5) adjacent to the third vertical wall (8).

## Patentansprüche

1. Verfahren zum Herstellen eines rollgeformten Rahmens, umfassend die folgenden Schritte:
Schritt 1: getrenntes Rollen und Biegen von zwei gegenüberliegenden Enden einer zu bearbeitenden Platte, um getrennt eine erste vertikale Wand (1) und eine erste horizontale Wand (2) zu bilden, die an den beiden gegenüberliegenden Enden der zu bearbeitenden Platte miteinander verbunden sind, wobei eine untere Platte (3) zwischen zwei ersten vertikalen Wänden (1) gebildet wird;
Schritt 2: für jedes der beiden gegenüberliegenden Enden der Bodenplatte (3), Rollen und Biegen eines Endes der ersten horizontalen Wand (2), die an die erste vertikale Wand (1) angrenzt, um eine abgestufte Biegestruktur (4) zu bilden;
Schritt 3: für jedes der beiden gegenüberliegenden Enden der unteren Platte (3), Rollen und Biegen der ersten horizontalen Wand (2), um eine zweite vertikale Wand (5), eine zweite horizontale Wand (6) und eine dritte horizontale Wand (7) zu bilden, die miteinander verbunden sind;
Schritt 4: für jedes der beiden gegenüberliegenden Enden der unteren Platte (3), Rollen und Biegen der zweiten horizontalen Wand (6), um eine dritte vertikale Wand (8) und eine vierte horizontale Wand (9) zu bilden, die miteinander verbunden sind; und Rollen und Biegen der dritten horizontalen Wand (7), um eine vierte vertikale Wand (10) und eine fünfte horizontale Wand (11) zu bilden, die miteinander verbunden sind, wobei die vierte vertikale Wand (10) an der ersten vertikalen Wand (1) anliegt;
Schritt 5: für jedes der beiden gegenüberliegenden Enden der unteren Platte (3), Durchführen von Laserschweißen an einer Verbindung der vierten vertikalen Wand (10) und der ersten vertikalen Wand (1), wobei die zweite vertikale Wand (5), die dritte vertikale Wand (8), die vierte horizontale Wand (9) und die erste vertikale Wand (1) einen ersten Hohlraum (12) und einen zweiten Hohlraum (13) jeweils an den beiden gegenüberliegenden Enden der unteren Platte (3) bilden;
Schritt 6: für jedes der beiden gegenüberliegenden Enden der unteren Platte (3), Rollen und Biegen eines Endes der fünften horizontalen Wand (11) von der vierten vertikalen Wand (10) weg, um eine Verbindungskante (14) und eine sechste horizontale Wand (15) zu bilden, die miteinander verbunden sind;
Schritt 7: für jedes der beiden gegenüberliegenden Enden der unteren Platte (3), Rollen und Biegen der sechsten horizontalen Wand (15), um eine fünfte vertikale Wand (16) und eine siebte horizontale Wand (17) zu bilden, die miteinander verbunden sind, wobei die Verbindungskante (14) an der zweiten vertikalen Wand (5) anliegt; und
Schritt 8: für jedes der beiden gegenüberliegenden Enden der unteren Platte (3), Durchführen von Laserschweißen an einer Verbindung der Verbindungskante (14) und der zweiten vertikalen Wand (5), wobei die vierte vertikale Wand (10), die fünfte vertikale Wand (16), die siebte horizontale Wand (17) und die zweite vertikale Wand (5) einen dritten Hohlraum (18) und einen vierten Hohlraum (19) jeweils an den beiden gegenüberliegenden Enden der unteren Platte (3) bilden.

2. Verfahren zum Herstellen des rollgeformten Rahmens nach Anspruch 1, wobei im Schritt 1 eine erste Biegestruktur (27) zwischen der ersten vertikalen Wand (1) und der unteren Platte (3) gebildet wird und eine zweite Biegestruktur (28) zwischen der ersten horizontalen Wand (2) und der ersten vertikalen Wand (1) gebildet wird;
im Schritt 2 eine dritte Biegestruktur (29) und eine vierte Biegestruktur (30) in der abgestuften Biegestruktur (4) gebildet werden;
im Schritt 3 zwei Enden der zweiten horizontalen Wand (6) mit der abgestuften Biegestruktur (4) und der zweiten vertikalen Wand (5) verbunden werden, eine fünfte Biegestruktur (31) zwischen der zweiten horizontalen Wand (6) und der zweiten vertikalen Wand (5) gebildet wird, und eine sechste Biegestruktur (32) zwischen der zweiten vertikalen Wand (5) und der dritten horizontalen Wand (7) gebildet wird;
im Schritt 4 eine siebte Biegestruktur (33) zwischen der dritten vertikalen Wand (8) und der vierten horizontalen Wand (9) gebildet wird und zwei Enden der vierten horizontalen Wand (9) mit der abgestuften Biegestruktur (4) und der dritten vertikalen Wand (8) verbunden werden;
eine achte Biegestruktur (34) zwischen der vierten vertikalen Wand (10) und der fünften horizontalen Wand (11) gebildet wird, und zwei Enden der vierten vertikalen Wand (10) mit der fünften horizontalen Wand (11) bzw. der zweiten vertikalen Wand (5) verbunden sind;
im Schritt 6 eine neunte Biegestruktur (35) zwischen der Verbindungskante (14) und der sechsten horizontalen Wand (15) gebildet wird; und
im Schritt 7 zwischen der fünften vertikalen Wand (16) und der siebten horizontalen Wand (17) eine zehnte Biegestruktur (36) gebildet wird, und zwei Enden der fünften vertikalen Wand (16) mit der Verbindungskante (14) und der siebten horizontalen Wand (17) verbunden werden.

3. Verfahren zum Herstellen des rollgeformten Rahmens nach Anspruch 2, wobei der Schritt 1 insbesondere die folgenden Schritte umfasst:
Schritt 1.1: separates Rollen und Biegen der beiden gegenüberliegenden Enden der zu bearbeitenden Platte, um eine erste Seitenkantenstruktur (20) und eine zweite Seitenkantenstruktur (21) an den beiden gegenüberliegenden Enden der zu bearbeitenden Platte zu bilden, wobei die untere Platte (3) zwischen der ersten Seitenkantenstruktur (20) und der zweiten Seitenkantenstruktur (21) gebildet wird, eine erste Eckstruktur (53) zwischen der ersten Seitenkantenstruktur (20) und der unteren Platte (3) gebildet wird, und die erste Eckstruktur (53) zwischen der zweiten Seitenkantenstruktur (21) und der unteren Platte (3) gebildet wird;
Schritt 1.2: separates Rollen und Biegen der ersten Seitenkantenstruktur (20) und der zweiten Seitenkantenstruktur (21), um die erste vertikale Wand (1) und die erste horizontale Wand (2) zu bilden, wobei eine zweite Eckstruktur (54) zwischen der ersten vertikalen Wand (1) und der ersten horizontalen Wand (2) gebildet wird; und
Schritt 1.3: Rollen und Biegen der ersten vertikalen Wand (1) und der ersten horizontalen Wand (2) mehrere Male, allmähliches Verringern eines Winkels der ersten Eckstruktur (53), um die erste Biegestruktur (27) zu bilden, und allmähliches Verringern eines Winkels der zweiten Eckstruktur (54), um die zweite Biegestruktur (28) zu bilden.

4. Verfahren zum Herstellen des rollgeformten Rahmens nach Anspruch 3, wobei in dem Schritt 1.1 der Winkel der ersten Eckstruktur (53) 177° beträgt;
im Schritt 1.2 der Winkel der ersten Eckstruktur (53) 170° beträgt und der Winkel der zweiten Eckstruktur (54) 172° beträgt; und
der Schritt 1.3 insbesondere die folgenden Schritte umfasst:
Schritt 1.3.1: Rollen und Biegen der ersten vertikalen Wand (1) und der ersten horizontalen Wand (2), sodass der Winkel der ersten Eckstruktur (53) 160° und der Winkel der zweiten Eckstruktur (54) 162° beträgt;
Schritt 1.3.2: Rollen und Biegen der ersten vertikalen Wand (1) und der ersten horizontalen Wand (2), sodass der Winkel der ersten Eckstruktur (53) 145° und der Winkel der zweiten Eckstruktur (54) 148° beträgt;
Schritt 1.3.3: Rollen und Biegen der ersten vertikalen Wand (1) und der ersten horizontalen Wand (2), sodass der Winkel der ersten Eckstruktur (53) 130° und der Winkel der zweiten Eckstruktur (54) 132° beträgt;
Schritt 1.3.4: Rollen und Biegen der ersten vertikalen Wand (1) und der ersten horizontalen Wand (2), sodass der Winkel der ersten Eckstruktur (53) 115° und der Winkel der zweiten Eckstruktur (54) 118° beträgt;
Schritt 1.3.5: Rollen und Biegen der ersten vertikalen Wand (1) und der ersten horizontalen Wand (2), sodass der Winkel der ersten Eckstruktur (53) 100° und der Winkel der zweiten Eckstruktur (54) 103° beträgt;
Schritt 1.3.6: Rollen und Biegen der ersten vertikalen Wand (1) und der ersten horizontalen Wand (2), sodass der Winkel der ersten Eckstruktur (53) 90° beträgt, die erste Biegestruktur (27) gebildet wird und der Winkel der zweiten Eckstruktur (54) 93° beträgt; und
Schritt 1.3.7: Rollen und Biegen der ersten horizontalen Wand (2), sodass der Winkel der zweiten Eckstruktur (54) 90° beträgt und die zweite Biegestruktur (28) gebildet wird.

5. Verfahren zum Herstellen des rollgeformten Rahmens nach Anspruch 2, wobei der Schritt 2 insbesondere die folgenden Schritte umfasst:
Schritt 2.1: Rollen und Biegen des Endes der ersten horizontalen Wand (2), die an die erste vertikale Wand (1) angrenzt, um eine abgestufte ebene Struktur (22) und eine dritte Seitenkantenstruktur (23) zu bilden, wobei eine dritte Eckstruktur (55) zwischen der abgestuften ebenen Struktur (22) und der dritten Seitenkantenstruktur (23) gebildet wird;
Schritt 2.2: Rollen und Biegen der dritten Seitenkantenstruktur (23), um eine abgestufte, geneigte Oberflächenstruktur (24) und eine vierte Seitenkantenstruktur (25) zu bilden, wobei die dritte Eckstruktur (55) zwischen der abgestuften ebenen Struktur (22) und der abgestuften geneigten Oberflächenstruktur (24) gebildet wird, und eine vierte Eckstruktur (56) zwischen der abgestuften geneigten Oberflächenstruktur (24) und der vierten Seitenkantenstruktur (25) gebildet wird; und
Schritt 2.3: Rollen und Biegen der vierten Seitenkantenstruktur (25) und der abgestuften geneigten Oberflächenstruktur (24) mehrere Male, allmähliches Vergrößern eines Winkels der dritten Eckstruktur (55), um die dritte Biegestruktur (29) zu bilden, und allmähliches Vergrößern eines Winkels der vierten Eckstruktur (56), um die vierte Biegestruktur (30) zu bilden.

6. Verfahren zum Herstellen des rollgeformten Rahmens nach Anspruch 5, wobei in dem Schritt 2.1 der Winkel der dritten Eckstruktur (55) 3° beträgt;
im Schritt 2.2 der Winkel der dritten Eckstruktur (55) 15° beträgt und der Winkel der vierten Eckstruktur (56) 13° beträgt; und
der Schritt 2.3 insbesondere die folgenden Schritte umfasst:
Schritt 2.3.1: Rollen und Biegen der vierten Seitenkantenstruktur (25) und der abgestuften geneigten Oberflächenstruktur (24), sodass der Winkel der dritten Eckstruktur (55) 30° und der Winkel der vierten Eckstruktur (56) 28° beträgt;
Schritt 2.3.2: Rollen und Biegen der vierten Seitenkantenstruktur (25) und der abgestuften geneigten Oberflächenstruktur (24), sodass der Winkel der dritten Eckstruktur (55) 45° und der Winkel der vierten Eckstruktur (56) 42° beträgt;
Schritt 2.3.3: Rollen und Biegen der vierten Seitenkantenstruktur (25) und der abgestuften Oberflächenstruktur (24), sodass der Winkel der dritten Eckstruktur (55) 54° beträgt, die dritte Biegestruktur (29) gebildet wird und der Winkel der vierten Eckstruktur (56) 52° beträgt; und
Schritt 2.3.4: Rollen und Biegen der vierten Seitenkantenstruktur (25), sodass der Winkel der vierten Eckstruktur (56) 54° beträgt und die vierte Biegestruktur (30) gebildet wird.

7. Verfahren zum Herstellen des rollgeformten Rahmens nach Anspruch 2, wobei der Schritt 3 insbesondere die folgenden Schritte umfasst:
Schritt 3.1: Rollen und Biegen der ersten horizontalen Wand (2), um die zweite horizontale Wand (6) und eine fünfte Seitenkantenstruktur (26) zu bilden, wobei eine fünfte Eckstruktur (57) zwischen der zweiten horizontalen Wand (6) und der fünften Seitenkantenstruktur (26) gebildet wird;
Schritt 3.2: Rollen und Biegen der fünften Seitenkantenstruktur (26), um die zweite vertikale Wand (5) und die dritte horizontale Wand (7) zu bilden, wobei die fünfte Eckstruktur (57) zwischen der zweiten horizontalen Wand (6) und der zweiten vertikalen Wand (5) gebildet wird, und eine sechste Eckstruktur (58) zwischen der zweiten vertikalen Wand (5) und der dritten horizontalen Wand (7) gebildet wird; und
Schritt 3.3: Rollen und Biegen der zweiten vertikalen Wand (5) und der dritten horizontalen Wand (7) mehrere Male, allmähliches Verringern eines Winkels der fünften Eckstruktur (57), um die fünfte Biegestruktur (31) zu bilden, und allmähliches Verringern eines Winkels der sechsten Eckstruktur (58), um die sechste Biegestruktur (32) zu bilden.

8. Verfahren zum Herstellen des rollgeformten Rahmens nach Anspruch 7, wobei in dem Schritt 3.1 der Winkel der fünften Eckstruktur (57) 176° beträgt;
im Schritt 3.2 der Winkel der fünften Eckstruktur (57) 165° beträgt und der Winkel der sechsten Eckstruktur (58) 170° beträgt; und
der Schritt 3.3 insbesondere die folgenden Schritte umfasst:
Schritt 3.3.1: Rollen und Biegen der zweiten vertikalen Wand (5) und der dritten horizontalen Wand (7), sodass der Winkel der fünften Eckstruktur (57) 150° und der Winkel der sechsten Eckstruktur (58) 155° beträgt;
Schritt 3.3.2: Rollen und Biegen der zweiten vertikalen Wand (5) und der dritten horizontalen Wand (7), sodass der Winkel der fünften Eckstruktur (57) 135° und der Winkel der sechsten Eckstruktur (58) 140° beträgt;
Schritt 3.3.3: Rollen und Biegen der zweiten vertikalen Wand (5) und der dritten horizontalen Wand (7), sodass der Winkel der fünften Eckstruktur (57) 120° und der Winkel der sechsten Eckstruktur (58) 125° beträgt;
Schritt 3.3.4: Rollen und Biegen der zweiten vertikalen Wand (5) und der dritten horizontalen Wand (7), sodass der Winkel der fünften Eckstruktur (57) 105° und der Winkel der sechsten Eckstruktur (58) 110° beträgt;
Schritt 3.3.5: Rollen und Biegen der zweiten vertikalen Wand (5) und der dritten horizontalen Wand (7), sodass der Winkel der fünften Eckstruktur (57) 90° beträgt, die fünfte Biegestruktur (31) gebildet wird und der Winkel der sechsten Eckstruktur (58) 95° beträgt; und
Schritt 3.3.6: Rollen und Biegen der dritten horizontalen Wand (7), sodass der Winkel der sechsten Eckstruktur (58) 90° beträgt und die sechste Biegestruktur (32) gebildet wird.

9. Verfahren zum Herstellen des rollgeformten Rahmens nach Anspruch 2, wobei der Schritt 4 insbesondere die folgenden Schritte umfasst:
Schritt 4.1: Rollen und Biegen der zweiten horizontalen Wand (6), um die dritte vertikale Wand (8) und die vierte horizontale Wand (9) zu bilden, wobei eine siebte Eckstruktur (59) zwischen der dritten vertikalen Wand (8) und der vierten horizontalen Wand (9) gebildet wird;
Schritt 4.2: Rollen und Biegen der dritten vertikalen Wand (8) und erstmaliges Verringern eines Winkels der siebten Eckstruktur (59);
Schritt 4.3: Rollen der dritten horizontalen Wand (7), um die vierte vertikale Wand (10) und die fünfte horizontale Wand (11) zu bilden, wobei eine achte Eckstruktur (60) zwischen der vierten vertikalen Wand (10) und der fünften horizontalen Wand (11) gebildet wird; und Rollen und Biegen der dritten vertikalen Wand (8) und Verkleinern des Winkels der siebten Eckstruktur (59) zum zweiten Mal; und
Schritt 4.4: Rollen und Biegen der fünften horizontalen Wand (11) und der dritten vertikalen Wand (8) mehrere Male, allmähliches Verringern des Winkels der siebten Eckstruktur (59), um die siebte Biegestruktur (33) zu bilden, und allmähliches Verringern eines Winkels der achten Eckstruktur (60), um die achte Biegestruktur (34) zu bilden.

10. Verfahren zum Herstellen des rollgeformten Rahmens nach Anspruch 9, wobei im Schritt 4.1 der Winkel der siebten Eckstruktur (59) im geformten Zustand 175° beträgt;
im Schritt 4.2 der Winkel der siebten Eckstruktur (59) 170° beträgt;
im Schritt 4.3 der Winkel der siebten Eckstruktur (59) 160° beträgt und der Winkel der achten Eckstruktur (60) 170° beträgt; und
der Schritt 4.4 insbesondere die folgenden Schritte umfasst:
Schritt 4.4.1: Rollen und Biegen der fünften horizontalen Wand (11) und der dritten vertikalen Wand (8), sodass der Winkel der siebten Eckstruktur (59) 150° und der Winkel der achten Eckstruktur (60) 160° beträgt;
Schritt 4.4.2: Rollen und Biegen der fünften horizontalen Wand (11) und der dritten vertikalen Wand (8), sodass der Winkel der siebten Eckstruktur (59) 140° und der Winkel der achten Eckstruktur (60) 150° beträgt;
Schritt 4.4.3: Rollen und Biegen der fünften horizontalen Wand (11) und der dritten vertikalen Wand (8), sodass der Winkel der siebten Eckstruktur (59) 130° und der Winkel der achten Eckstruktur (60) 140° beträgt;
Schritt 4.4.4: Rollen und Biegen der fünften horizontalen Wand (11) und der dritten vertikalen Wand (8), sodass der Winkel der siebten Eckstruktur (59) 120° und der Winkel der achten Eckstruktur (60) 130° beträgt;
Schritt 4.4.5: Rollen und Biegen der fünften horizontalen Wand (11) und der dritten vertikalen Wand (8), sodass der Winkel der siebten Eckstruktur (59) 110° und der Winkel der achten Eckstruktur (60) 120° beträgt;
Schritt 4.4.6: Rollen und Biegen der fünften horizontalen Wand (11) und der dritten vertikalen Wand (8), sodass der Winkel der siebten Eckstruktur (59) 100° und der Winkel der achten Eckstruktur (60) 110° beträgt;
Schritt 4.4.7: Rollen und Biegen der fünften horizontalen Wand (11) und der dritten vertikalen Wand (8), sodass der Winkel der siebten Eckstruktur (59) 90° beträgt, die siebte Knickstruktur (33) gebildet wird und der Winkel der achten Eckstruktur (60) 100° beträgt; und
Schritt 4.4.8: Rollen und Biegen der fünften horizontalen Wand (11), sodass der Winkel der achten Eckstruktur (60) 90° beträgt und die achte Biegestruktur (34) gebildet wird.

11. Verfahren zum Herstellen des rollgeformten Rahmens nach Anspruch 2, wobei der Schritt 6 insbesondere die folgenden Schritte umfasst:
Schritt 6.1: Rollen und Biegen des Endes der fünften horizontalen Wand (11) von der vierten vertikalen Wand (10) weg, um die Verbindungskante (14) und die sechste horizontale Wand (15) zu bilden, wobei eine neunte Eckstruktur (61) zwischen der Verbindungskante (14) und der sechsten horizontalen Wand (15) gebildet wird; und
Schritt 6.2: Rollen und Biegen der Verbindungskante (14) mehrere Male, und allmähliches Verringern eines Winkels der neunten Eckstruktur (61), um die neunte Biegestruktur (35) zu bilden.

12. Verfahren zum Herstellen des rollgeformten Rahmens nach Anspruch 11, wobei in dem Schritt 6.1 der Winkel der neunten Eckstruktur (61) 180° beträgt; und
der Schritt 6.2 insbesondere die folgenden Schritte umfasst:
Schritt 6.2.1: Rollen und Biegen der Verbindungskante (14), sodass der Winkel der neunten Eckstruktur (61) 150° beträgt;
Schritt 6.2.2: Rollen und Biegen der Verbindungskante (14), sodass der Winkel der neunten Eckstruktur (61) 120° beträgt; und
Schritt 6.2.3: Rollen und Biegen der Verbindungskante (14), sodass der Winkel der neunten Eckstruktur (61) 90° beträgt und die neunte Biegestruktur (35) gebildet wird.

13. Verfahren zum Herstellen des rollgeformten Rahmens nach Anspruch 2, wobei der Schritt 7 insbesondere die folgenden Schritte umfasst:
Schritt 7.1: Rollen und Biegen der sechsten horizontalen Wand (15), um die fünfte vertikale Wand (16) und die siebte horizontale Wand (17) zu bilden, wobei eine zehnte Eckstruktur (62) zwischen der fünften vertikalen Wand (16) und der siebten horizontalen Wand (17) gebildet wird; und
Schritt 7.2: Rollen und Biegen der fünften vertikalen Wand (16) mehrere Male, und allmähliches Verringern eines Winkels der zehnten Eckstruktur (62), um die zehnte Biegestruktur (36) zu bilden.

14. Verfahren zum Herstellen des rollgeformten Rahmens nach Anspruch 13, wobei in dem Schritt 7.1 der Winkel der zehnten Eckstruktur (62) 163° beträgt; und
der Schritt 7.2 insbesondere die folgenden Schritte umfasst:
Schritt 7.2.1: Rollen und Biegen der fünften vertikalen Wand (16), sodass der Winkel der zehnten Eckstruktur (62) 145° beträgt;
Schritt 7.2.2: Rollen und Biegen der fünften vertikalen Wand (16), sodass der Winkel der zehnten Eckstruktur (62) 130° beträgt;
Schritt 7.2.3: Rollen und Biegen der fünften vertikalen Wand (16), sodass der Winkel der zehnten Eckstruktur (62) 115° beträgt;
Schritt 7.2.4: Rollen und Biegen der fünften vertikalen Wand (16), sodass der Winkel der zehnten Eckstruktur (62) 100° beträgt; und
Schritt 7.2.5: Rollen und Biegen der fünften vertikalen Wand (16), sodass der Winkel der zehnten Eckstruktur (62) 90° beträgt und die zehnte Biegestruktur (36) gebildet wird.

15. Verfahren zum Herstellen des rollgeformten Rahmens nach Anspruch 2, wobei im Schritt 8 an zwei gegenüberliegenden Enden der unteren Platte (3) ein linker Längsträgerabschnitt (49) und ein rechter Längsträgerabschnitt (50) gebildet werden; und
das Verfahren zum Herstellen des rollgeformten Rahmens ferner die folgenden Schritte umfasst:
Schritt 9: Schneiden des linken Längsträgerabschnitts (49) und des rechten Längsträgerabschnitts (50), die sich an vier Ecken der unteren Platte (3) befinden, um eine vordere Längsträgerplatte (37) und eine hintere Längsträgerplatte (38) an zwei weiteren gegenüberliegenden Enden der unteren Platte (3) zu bilden;
Schritt 10: für jedes der beiden anderen gegenüberliegenden Enden der unteren Platte (3), separates Biegen der vorderen Längsträgerplatte (37) und der hinteren Längsträgerplatte (38), um eine sechste vertikale Wand (39) und eine achte horizontale Wand (40) zu bilden, wobei zwischen der sechsten vertikalen Wand (39) und der achten horizontalen Wand (40) eine elfte Biegestruktur (41) gebildet wird;
Schritt 11: für jedes der beiden anderen gegenüberliegenden Enden der unteren Platte (3), Biegen der achten horizontalen Wand (40), um eine siebte vertikale Wand (42) und eine neunte horizontale Wand (43) zu bilden, wobei eine zwölfte Biegestruktur (44) zwischen der siebten vertikalen Wand (42) und der neunten horizontalen Wand (43) gebildet wird;
Schritt 12: für jedes der beiden anderen gegenüberliegenden Enden der unteren Platte (3), Biegen der siebten vertikalen Wand (42), um eine achte vertikale Wand (45) und eine zehnte horizontale Wand (46) zu bilden, wobei eine dreizehnte Biegestruktur (47) zwischen der achten vertikalen Wand (45) und der zehnten horizontalen Wand (46) gebildet wird;
Schritt 13: Biegen der neunten horizontalen Wand (43) für jedes der beiden anderen gegenüberliegenden Enden der unteren Platte (3), sodass die sechste vertikale Wand (39) an der unteren Platte (3) anliegt, Bilden einer vierzehnten Biegestruktur (48) zwischen der neunten horizontalen Wand (43) und der unteren Platte (3) und Bilden eines vorderen Längsträgerabschnitts (51) und eines hinteren Längsträgerabschnitts (52) an den beiden anderen gegenüberliegenden Enden der unteren Platte (3); und
Schritt 14: Schweißen einer Verbindung zwischen dem vorderen Längsträgerabschnitt (51) und dem linken Längsträgerabschnitt (49), Schweißen einer Verbindung zwischen dem vorderen Längsträgerabschnitt (51) und dem rechten Längsträgerabschnitt (50), Schweißen einer Verbindung zwischen dem hinteren Längsträgerabschnitt (52) und dem linken Längsträgerabschnitt (49), Schweißen einer Verbindung zwischen dem hinteren Längsträgerabschnitt (52) und dem rechten Längsträgerabschnitt (50), und Schweißen einer Verbindung zwischen der sechsten vertikalen Wand (39) und der unteren Platte (3).

16. Rollgeformter Rahmen, hergestellt nach dem Verfahren zum Herstellen des rollgeformten Rahmens nach einem der Ansprüche 1 bis 15, umfassend eine untere Platte (3), einen linken Längsträgerabschnitt (49) und einen rechten Längsträgerabschnitt (50), wobei der linke Längsträgerabschnitt (49) und der rechte Längsträgerabschnitt (50) jeweils an zwei gegenüberliegenden Enden der unteren Platte (3) angeordnet sind;
der linke Längsträgerabschnitt (49) und der rechte Längsträgerabschnitt (50) jeweils die erste vertikale Wand (1), die vierte horizontale Wand (9), die dritte vertikale Wand (8), die zweite vertikale Wand (5), die vierte vertikale Wand (10), die siebte horizontale Wand (17), die fünfte vertikale Wand (16) und die Verbindungskante (14) umfassen, die aufeinanderfolgend verbunden sind;
die vierte horizontale Wand (9), die dritte vertikale Wand (8) und die zweite vertikale Wand (5) eine erste Kerbenstruktur bilden, und die zweite vertikale Wand (5), die vierte vertikale Wand (10) und die siebte horizontale Wand (17) eine zweite Kerbenstruktur bilden;
die erste vertikale Wand (1) mit einem Öffnungsende der ersten Kerbenstruktur verbunden ist, und die vierte vertikale Wand (10) mit der ersten vertikalen Wand (1) verbunden ist; und
die fünfte vertikale Wand (16) mit einem Öffnungsende der zweiten Kerbenstruktur verbunden ist, und die Verbindungskante (14) mit einem Ende der zweiten vertikalen Wand (5) neben der dritten vertikalen Wand (8) verbunden ist.

## Revendications

1. Procédé permettant de fabriquer un châssis de profilage, comprenant les étapes suivantes :
étape 1 : le laminage et le pliage séparément de deux extrémités opposées d'une plaque à usiner pour former séparément une première paroi verticale (1) et une première paroi horizontale (2) reliées l'une à l'autre au niveau des deux extrémités opposées de la plaque à usiner, dans lequel une plaque inférieure (3) est formée entre deux premières parois verticales (1) ;
étape 2 : pour chacune des deux extrémités opposées de la plaque inférieure (3), le laminage et le pliage d'une extrémité de la première paroi horizontale (2) adjacente à la première paroi verticale (1) pour former une structure pliée étagée (4) ;
étape 3 : pour chacune des deux extrémités opposées de la plaque inférieure (3), le laminage et le pliage de la première paroi horizontale (2) pour former une deuxième paroi verticale (5), une deuxième paroi horizontale (6) et une troisième paroi horizontale (7) qui sont reliées ;
étape 4 : pour chacune des deux extrémités opposées de la plaque inférieure (3), le laminage et le pliage de la deuxième paroi horizontale (6) pour former une troisième paroi verticale (8) et une quatrième paroi horizontale (9) reliées l'une à l'autre ; et le laminage et le pliage de la troisième paroi horizontale (7) pour former une quatrième paroi verticale (10) et une cinquième paroi horizontale (11) reliées l'une à l'autre, dans lequel la quatrième paroi verticale (10) vient en butée contre la première paroi verticale (1) ;
étape 5 : pour chacune des deux extrémités opposées de la plaque inférieure (3), la réalisation d'un soudage laser sur un joint de la quatrième paroi verticale (10) et de la première paroi verticale (1), dans lequel la deuxième paroi verticale (5), la troisième paroi verticale (8), la quatrième paroi horizontale (9) et la première paroi verticale (1) forment une première cavité (12) et une deuxième cavité (13), respectivement, au niveau des deux extrémités opposées de la plaque inférieure (3) ;
étape 6 : pour chacune des deux extrémités opposées de la plaque inférieure (3), le laminage et le pliage d'une extrémité de la cinquième paroi horizontale (11) à l'écart de la quatrième paroi verticale (10) pour former un bord de liaison (14) et une sixième paroi horizontale (15) reliés l'un à l'autre ;
étape 7 : pour chacune des deux extrémités opposées de la plaque inférieure (3), le laminage et le pliage de la sixième paroi horizontale (15) pour former une cinquième paroi verticale (16) et une septième paroi horizontale (17) reliées l'une à l'autre, dans lequel le bord de liaison (14) vient en butée contre la deuxième paroi verticale (5) ; et
étape 8 : pour chacune des deux extrémités opposées de la plaque inférieure (3), la réalisation d'un soudage laser sur un joint du bord de liaison (14) et de la deuxième paroi verticale (5), dans lequel la quatrième paroi verticale (10), la cinquième paroi verticale (16), la septième paroi horizontale (17) et la deuxième paroi verticale (5) forment une troisième cavité (18) et une quatrième cavité (19), respectivement, au niveau des deux extrémités opposées de la plaque inférieure (3).

2. Procédé permettant de fabriquer le châssis de profilage selon la revendication 1, dans lequel à l'étape 1, une première structure courbée (27) est formée entre la première paroi verticale (1) et la plaque inférieure (3), et une deuxième structure courbée (28) est formée entre la première paroi horizontale (2) et la première paroi verticale (1) ;
à l'étape 2, une troisième structure courbée (29) et une quatrième structure courbée (30) sont formées dans la structure pliée étagée (4) ;
à l'étape 3, deux extrémités de la deuxième paroi horizontale (6) sont reliées à la structure pliée étagée (4) et à la deuxième paroi verticale (5) respectivement, une cinquième structure courbée (31) est formée entre la deuxième paroi horizontale (6) et la deuxième paroi verticale (5), et une sixième structure courbée (32) est formée entre la deuxième paroi verticale (5) et la troisième paroi horizontale (7) ;
à l'étape 4, une septième structure courbée (33) est formée entre la troisième paroi verticale (8) et la quatrième paroi horizontale (9), et deux extrémités de la quatrième paroi horizontale (9) sont reliées à la structure pliée étagée (4) et à la troisième paroi verticale (8) respectivement ;
une huitième structure courbée (34) est formée entre la quatrième paroi verticale (10) et la cinquième paroi horizontale (11), et deux extrémités de la quatrième paroi verticale (10) sont reliées à la cinquième paroi horizontale (11) et à la deuxième paroi verticale (5) respectivement ;
à l'étape 6, une neuvième structure courbée (35) est formée entre le bord de liaison (14) et la sixième paroi horizontale (15) ; et
à l'étape 7, une dixième structure courbée (36) est formée entre la cinquième paroi verticale (16) et la septième paroi horizontale (17), et deux extrémités de la cinquième paroi verticale (16) sont reliées au bord de liaison (14) et à la septième paroi horizontale (17) respectivement.

3. Procédé permettant de fabriquer le châssis de profilage selon la revendication 2, dans lequel l'étape 1 comprend spécifiquement les étapes suivantes :
étape 1.1 : le laminage et le pliage séparément des deux extrémités opposées de la plaque à usiner pour former une première structure de bord latéral (20) et une deuxième structure de bord latéral (21) au niveau des deux extrémités opposées de la plaque à usiner respectivement, dans lequel la plaque inférieure (3) est formée entre la première structure de bord latéral (20) et la deuxième structure de bord latéral (21), une première structure d'angle (53) est formée entre la première structure de bord latéral (20) et la plaque inférieure (3), et la première structure d'angle (53) est formée entre la deuxième structure de bord latéral (21) et la plaque inférieure (3) ;
étape 1.2 : le laminage et le pliage séparément de la première structure de bord latéral (20) et la deuxième structure de bord latéral (21) pour former la première paroi verticale (1) et la première paroi horizontale (2), dans lequel une deuxième structure d'angle (54) est formée entre la première paroi verticale (1) et la première paroi horizontale (2) ; et
étape 1.3 : le laminage et le pliage de la première paroi verticale (1) et de la première paroi horizontale (2) plusieurs fois, la réduction progressive d'un angle de la première structure d'angle (53) pour former la première structure courbée (27), et la réduction progressive d'un angle de la deuxième structure d'angle (54) pour former la deuxième structure courbée (28).

4. Procédé permettant de fabriquer le châssis de profilage selon la revendication 3, dans lequel, à l'étape 1.1, l'angle de la première structure d'angle (53) est de 177° ;
à l'étape 1.2, l'angle de la première structure d'angle (53) est de 170° et l'angle de la deuxième structure d'angle (54) est de 172° ; et
l'étape 1.3 comprend spécifiquement les étapes suivantes :
étape 1.3.1 : le laminage et le pliage de la première paroi verticale (1) et de la première paroi horizontale (2), de telle sorte que l'angle de la première structure d'angle (53) est de 160° et l'angle de la deuxième structure d'angle (54) est de 162° ;
étape 1.3.2 : le laminage et le pliage de la première paroi verticale (1) et de la première paroi horizontale (2), de telle sorte que l'angle de la première structure d'angle (53) est de 145° et l'angle de la deuxième structure d'angle (54) est de 148° ;
étape 1.3.3 : le laminage et le pliage de la première paroi verticale (1) et de la première paroi horizontale (2), de telle sorte que l'angle de la première structure d'angle (53) est de 130° et que l'angle de la deuxième structure d'angle (54) est de 132° ;
étape 1.3.4 : le laminage et le pliage de la première paroi verticale (1) et de la première paroi horizontale (2), de telle sorte que l'angle de la première structure d'angle (53) est de 115° et que l'angle de la deuxième structure d'angle (54) est de 118° ;
étape 1.3.5 : le laminage et le pliage de la première paroi verticale (1) et de la première paroi horizontale (2), de telle sorte que l'angle de la première structure d'angle (53) est de 100° et que l'angle de la deuxième structure d'angle (54) est de 103° ;
étape 1.3.6 : le laminage et le pliage de la première paroi verticale (1) et de la première paroi horizontale (2), de telle sorte que l'angle de la première structure d'angle (53) est de 90°, que la première structure courbée (27) est formée et que l'angle de la deuxième structure d'angle (54) est de 93° ; et
étape 1.3.7 : le laminage et le pliage de la première paroi horizontale (2), de telle sorte que l'angle de la deuxième structure d'angle (54) est de 90°, et que la deuxième structure courbée (28) est formée.

5. Procédé permettant de fabriquer le châssis de profilage selon la revendication 2, dans lequel l'étape 2 comprend spécifiquement les étapes suivantes :
Étape 2.1 : le laminage et le pliage de l'extrémité de la première paroi horizontale (2) adjacente à la première paroi verticale (1) pour former une structure plane étagée (22) et une troisième structure de bord latéral (23), dans lequel une troisième structure d'angle (55) est formée entre la structure plane étagée (22) et la troisième structure de bord latéral (23) ;
Étape 2.2 : le laminage et le pliage de la troisième structure de bord latéral (23) pour former une structure de surface inclinée étagée (24) et une quatrième structure de bord latéral (25), dans lequel la troisième structure d'angle (55) est formée entre la structure plane étagée (22) et la structure de surface inclinée étagée (24), et une quatrième structure d'angle (56) est formée entre la structure de surface inclinée étagée (24) et la quatrième une structure de bord latéral (25) ; et
Etape 2.3 : le laminage et le pliage de la quatrième structure de bord latéral (25) et la structure de surface inclinée étagée (24) plusieurs fois, l'augmentation progressive d'un angle de la troisième structure d'angle (55) pour former la troisième structure d'angle (29), et l'augmentation progressive d'un angle de la quatrième structure d'angle (56) pour former la quatrième structure courbée (30).

6. Procédé permettant de fabriquer le châssis de profilage selon la revendication 5, dans lequel, à l'étape 2.1, l'angle de la troisième structure d'angle (55) est de 3° ;
à l'étape 2.2, l'angle de la troisième structure d'angle (55) est de 15° et l'angle de la quatrième structure d'angle (56) est de 13° ; et
l'étape 2.3 comprend spécifiquement les étapes suivantes :
étape 2.3.1 : le laminage et le pliage de la quatrième structure de bord latéral (25) et de la structure de surface inclinée étagée (24), de telle sorte que l'angle de la troisième structure d'angle (55) est de 30° et que l'angle de la quatrième structure d'angle (56) est de 28° ;
étape 2.3.2 : le laminage et le pliage de la quatrième structure de bord latéral (25) et de la structure de surface inclinée étagée (24), de telle sorte que l'angle de la troisième structure d'angle (55) est de 45° et que l'angle de la quatrième structure d'angle (56) est de 42° ;
étape 2.3.3 : le laminage et le pliage de la quatrième structure de bord latéral (25) et de la structure de surface inclinée étagée (24), de telle sorte que l'angle de la troisième structure d'angle (55) est de 54°, que la troisième structure courbée (29) est formée et que l'angle de la quatrième structure d'angle (56) est de 52° ; et
étape 2.3.4 : le laminage et le pliage de la structure du quatrième bord latéral (25), de telle sorte que l'angle de la quatrième structure d'angle (56) est de 54° et que la quatrième structure courbée (30) est formée.

7. Procédé permettant de fabriquer le châssis de profilage selon la revendication 2, dans lequel l'étape 3 comprend spécifiquement les étapes suivantes :
étape 3.1 : le laminage et le pliage de la première paroi horizontale (2) pour former la deuxième paroi horizontale (6) et une cinquième structure de bord latéral (26), dans lequel une cinquième structure d'angle (57) est formée entre la deuxième paroi horizontale (6) et la cinquième structure de bord latéral (26) ;
Étape 3.2 : le laminage et le pliage de la cinquième structure de bord latéral (26) pour former la deuxième paroi verticale (5) et la troisième paroi horizontale (7), dans lequel la cinquième structure d'angle (57) est formée entre la deuxième paroi horizontale (6) et la deuxième paroi verticale (5), et une sixième structure d'angle (58) est formée entre la deuxième paroi verticale (5) et la troisième paroi horizontale (7) ; et
étape 3.3 : le laminage et le pliage de la deuxième paroi verticale (5) et de la troisième paroi horizontale (7) plusieurs fois, la réduction progressive d'un angle de la cinquième structure d'angle (57) pour former la cinquième structure courbée (31), et la réduction progressive d'un angle de la sixième structure d'angle (58) pour former la sixième structure courbée (32).

8. Procédé permettant de fabriquer le châssis de profilage selon la revendication 7, dans lequel, à l'étape 3.1, l'angle de la cinquième structure d'angle (57) est de 176° ;
à l'étape 3.2, l'angle de la cinquième structure d'angle (57) est de 165° et l'angle de la sixième structure d'angle (58) est de 170° ; et
l'étape 3.3 comprend spécifiquement les étapes suivantes :
étape 3.3.1 : le laminage et le pliage de la deuxième paroi verticale (5) et de la troisième paroi horizontale (7), de telle sorte que l'angle de la cinquième structure d'angle (57) est de 150° et que l'angle de la sixième structure d'angle (58) est de 155° ;
étape 3.3.2 : le laminage et le pliage de la deuxième paroi verticale (5) et de la troisième paroi horizontale (7), de telle sorte que l'angle de la cinquième structure d'angle (57) est de 135° et que l'angle de la sixième structure d'angle (58) est de 140° ;
étape 3.3.3 : le laminage et le pliage de la deuxième paroi verticale (5) et de la troisième paroi horizontale (7), de telle sorte que l'angle de la cinquième structure d'angle (57) est de 120° et que l'angle de la sixième structure d'angle (58) est de 125° ;
étape 3.3.4 : le laminage et le pliage de la deuxième paroi verticale (5) et de la troisième paroi horizontale (7), de telle sorte que l'angle de la cinquième structure d'angle (57) est de 105° et que l'angle de la sixième structure d'angle (58) est de 110° ;
étape 3.3.5 : le laminage et le pliage de la deuxième paroi verticale (5) et de la troisième paroi horizontale (7), de telle sorte que l'angle de la cinquième structure d'angle (57) est de 90°, que la cinquième structure d'angle (31) est formée et que l'angle de la sixième structure d'angle (58) est de 95° ; et
étape 3.3.6 : le laminage et le pliage de la troisième paroi horizontale (7), de telle sorte que l'angle de la sixième structure d'angle (58) est de 90°, et que la sixième structure courbée (32) est formée.

9. Procédé permettant de fabriquer le châssis de profilage selon la revendication 2, dans lequel l'étape 4 comprend spécifiquement les étapes suivantes :
étape 4.1 : le laminage et le pliage de la deuxième paroi horizontale (6) pour former la troisième paroi verticale (8) et la quatrième paroi horizontale (9), dans lequel une septième structure d'angle (59) est formée entre la troisième paroi verticale (8) et la quatrième paroi horizontale (9) ;
étape 4.2 : le laminage et le pliage de la troisième paroi verticale (8), et la réduction d'un angle de la septième structure d'angle (59) pour une première fois ;
étape 4.3 : le laminage de la troisième paroi horizontale (7) pour former la quatrième paroi verticale (10) et la cinquième paroi horizontale (11), dans lequel une huitième structure d'angle (60) est formée entre la quatrième paroi verticale (10) et la cinquième paroi horizontale (11) ; et le laminage et le pliage de la troisième paroi verticale (8), et la réduction de l'angle de la septième structure d'angle (59) pour une seconde fois ; et
étape 4.4 : le laminage et le pliage de la cinquième paroi horizontale (11) et de la troisième paroi verticale (8) plusieurs fois, la réduction progressive d'angle de la septième structure d'angle (59) pour former la septième structure courbée (33), et la réduction progressive d'un angle de la huitième structure d'angle (60) pour former la huitième structure courbée (34).

10. Procédé permettant de fabriquer le châssis de profilage selon la revendication 9, dans lequel, à l'étape 4.1, l'angle de la septième structure d'angle (59), lorsqu'elle est formée, est de 175° ;
à l'étape 4.2, l'angle de la septième structure d'angle (59) est de 170° ;
à l'étape 4.3, l'angle de la septième structure d'angle (59) est de 160°, et l'angle de la huitième structure d'angle (60) est de 170° ; et
l'étape 4.4 comprend spécifiquement les étapes suivantes :
étape 4.4.1 : le laminage et le pliage de la cinquième paroi horizontale (11) et la troisième paroi verticale (8), de telle sorte que l'angle de la septième structure d'angle (59) est de 150° et que l'angle de la huitième structure d'angle (60) est de 160° ;
étape 4.4.2 : le laminage et le pliage de la cinquième paroi horizontale (11) et de la troisième paroi verticale (8), de telle sorte que l'angle de la septième structure d'angle (59) est de 140° et que l'angle de la huitième structure d'angle (60) est de 150° ;
étape 4.4.3 : le laminage et le pliage de la cinquième paroi horizontale (11) et de la troisième paroi verticale (8), de telle sorte que l'angle de la septième structure d'angle (59) est de 130° et que l'angle de la huitième structure d'angle (60) est de 140° ;
étape 4.4.4 : le laminage et le pliage de la cinquième paroi horizontale (11) et de la troisième paroi verticale (8), de telle sorte que l'angle de la septième structure d'angle (59) est de 120° et que l'angle de la huitième structure d'angle (60) est de 130° ;
étape 4.4.5 : le laminage et le pliage de la cinquième paroi horizontale (11) et de la troisième paroi verticale (8), de telle sorte que l'angle de la septième structure d'angle (59) est de 110° et que l'angle de la huitième structure d'angle (60) est de 120° ;
étape 4.4.6 : le laminage et le pliage de la cinquième paroi horizontale (11) et de la troisième paroi verticale (8), de telle sorte que l'angle de la septième structure d'angle (59) est de 100° et que l'angle de la huitième structure d'angle (60) est de 110° ;
étape 4.4.7 : le laminage et le pliage de la cinquième paroi horizontale (11) et de la troisième paroi verticale (8), de telle sorte que l'angle de la septième structure d'angle (59) est de 90°, que la septième structure courbée (33) est formée et que l'angle de la huitième structure d'angle (60) est de 100° ; et
étape 4.4.8 : le laminage et le pliage de la cinquième paroi horizontale (11), de telle sorte que l'angle de la huitième structure d'angle (60) est de 90°, et que la huitième structure courbée (34) est formée.

11. Procédé permettant de fabriquer le châssis de profilage selon la revendication 2, dans lequel l'étape 6 comprend spécifiquement les étapes suivantes :
étape 6.1 : le laminage et le pliage de l'extrémité de la cinquième paroi horizontale (11) à l'écart de la quatrième paroi verticale (10) pour former le bord de liaison (14) et la sixième paroi horizontale (15), dans lequel une neuvième structure d'angle (61) est formée entre le bord de liaison (14) et la sixième paroi horizontale (15) ; et
étape 6.2 : le laminage et le pliage du bord de liaison (14) plusieurs fois, et la réduction progressive d'un angle de la neuvième structure d'angle (61) pour former la neuvième structure courbée (35).

12. Procédé permettant de fabriquer le châssis de profilage selon la revendication 11, dans lequel, à l'étape 6.1, l'angle de la neuvième structure d'angle (61) est de 180° ; et
l'étape 6.2 comprend spécifiquement les étapes suivantes :
étape 6.2.1 : le laminage et le pliage du bord de liaison (14), de telle sorte que l'angle de la structure de neuvième coin (61) est de 150° ;
étape 6.2.2 : le laminage et le pliage du bord de liaison (14), de telle sorte que l'angle de la neuvième structure d'angle (61) est de 120° ; et
étape 6.2.3 : le laminage et le pliage du bord de liaison (14), de telle sorte que l'angle de la neuvième structure d'angle (61) est de 90°, et que la neuvième structure courbée (35) est formée.

13. Procédé permettant de fabriquer le châssis de profilage selon la revendication 2, dans lequel l'étape 7 comprend spécifiquement les étapes suivantes :
étape 7.1 : le laminage et le pliage de la sixième paroi horizontale (15) pour former la cinquième paroi verticale (16) et la septième paroi horizontale (17), dans lequel une dixième structure d'angle (62) est formée entre la cinquième paroi verticale (16) et la septième paroi horizontale (17) ; et
étape 7.2 : le laminage et le pliage de la cinquième paroi verticale (16) plusieurs fois, et la réduction progressive d'un angle de la dixième structure d'angle (62) pour former la dixième structure courbée (36).

14. Procédé permettant de fabriquer le châssis de profilage selon la revendication 13, dans lequel, à l'étape 7.1, l'angle de la dixième structure d'angle (62) est de 163° ; et
l'étape 7.2 comprend spécifiquement les étapes suivantes :
étape 7.2.1 : le laminage et le pliage de la cinquième paroi verticale (16), de telle sorte que l'angle de la dixième structure d'angle (62) est de 145° ;
étape 7.2.2 : le laminage et le pliage de la cinquième paroi verticale (16), de telle sorte que l'angle de la dixième structure d'angle (62) est de 130° ;
étape 7.2.3 : le laminage et le pliage de la cinquième paroi verticale (16), de telle sorte que l'angle de la dixième structure d'angle (62) est de 115° ;
étape 7.2.4 : le laminage et le pliage de la cinquième paroi verticale (16), de telle sorte que l'angle de la dixième structure d'angle (62) est de 100° ; et
étape 7.2.5 : le laminage et le pliage de la cinquième paroi verticale (16), de telle sorte que l'angle de la dixième structure d'angle (62) est de 90°, et que la dixième structure courbée (36) est formée.

15. Procédé permettant de fabriquer le châssis de profilage selon la revendication 2, dans lequel à l'étape 8, une partie de poutre longitudinale gauche (49) et une partie de poutre longitudinale droite (50) sont formées au niveau de deux extrémités opposées de la plaque inférieure (3) ; et
le procédé permettant de fabriquer le châssis de profilage comprend en outre les étapes suivantes :
étape 9 : la découpe de la partie de poutre longitudinale gauche (49) et de la partie de poutre longitudinale droite (50) situées au niveau de quatre angles de la plaque inférieure (3) pour former une plaque de poutre longitudinale avant (37) et une plaque de poutre longitudinale arrière (38) au niveau de deux autres extrémités opposées de la plaque inférieure (3) ;
étape 10 : pour chacune des deux autres extrémités opposées de la plaque inférieure (3), le pliage séparé de la plaque de poutre longitudinale avant (37) et de la plaque de poutre longitudinale arrière (38) pour former une sixième paroi verticale (39) et une huitième paroi horizontale (40), dans lequel une onzième structure courbée (41) est formée entre la sixième paroi verticale (39) et la huitième paroi horizontale (40) ;
étape 11 : pour chacune des deux autres extrémités opposées de la plaque inférieure (3), le pliage de la huitième paroi horizontale (40) pour former une septième paroi verticale (42) et une neuvième paroi horizontale (43), dans lequel une douzième structure courbée (44) est formée entre la septième paroi verticale (42) et la neuvième paroi horizontale (43) ;
étape 12 : pour chacune des deux autres extrémités opposées de la plaque inférieure (3), le pliage de la septième paroi verticale (42) pour former une huitième paroi verticale (45) et une dixième paroi horizontale (46), dans lequel une treizième structure courbée (47) est formée entre la huitième paroi verticale (45) et la dixième paroi horizontale (46) ;
étape 13 : pour chacune des deux autres extrémités opposées de la plaque inférieure (3), le pliage de la neuvième paroi horizontale (43), de telle sorte que la sixième paroi verticale (39) vient en butée contre la plaque inférieure (3), une quatorzième structure courbée (48) est formée entre la neuvième paroi horizontale (43) et la plaque inférieure (3), et une partie de poutre longitudinale avant (51) et une partie de poutre longitudinale arrière (52) sont respectivement formées au niveau des deux autres des extrémités opposées de la plaque inférieure (3) ; et
étape 14 : le soudage d'un joint de la partie de poutre longitudinale avant (51) et de la partie de poutre longitudinale gauche (49), le soudage d'un joint de la partie de poutre longitudinale avant (51) et de la partie de poutre longitudinale droite (50), le soudage d'un joint de la partie de poutre longitudinale arrière (52) et de la partie de poutre longitudinale gauche (49), le soudage d'un joint de la partie de poutre longitudinale arrière (52) et de la partie de poutre longitudinale droite (50), et le soudage d'un joint de la sixième paroi verticale (39) et de la plaque inférieure (3).

16. Châssis de profilage, fabriqué à l'aide du procédé permettant de fabriquer le châssis de profilage selon l'une quelconque des revendications 1 à 15, comprenant une plaque inférieure (3), une partie de poutre longitudinale gauche (49) et une partie de poutre longitudinale droite (50), dans lequel la partie de poutre longitudinale gauche (49) et la partie de poutre longitudinale droite (50) sont disposées respectivement au niveau de deux extrémités opposées de la plaque inférieure (3) ;
chacune de la partie de poutre longitudinale gauche (49) et de la partie de poutre longitudinale droite (50) comprend la première paroi verticale (1), la quatrième paroi horizontale (9), la troisième paroi verticale (8), la deuxième paroi verticale (5), la quatrième paroi verticale (10), la septième paroi horizontale (17), la cinquième paroi verticale (16) et le bord de liaison (14) qui sont reliés de manière séquentielle ;
la quatrième paroi horizontale (9), la troisième paroi verticale (8) et la deuxième paroi verticale (5) forment une première structure d'encoche, et la deuxième paroi verticale (5), la quatrième paroi verticale (10) et la septième paroi horizontale (17) forment une seconde structure d'encoche ;
la première paroi verticale (1) est reliée à une extrémité d'ouverture de la première structure d'encoche, et la quatrième paroi verticale (10) est reliée à la première paroi verticale (1) ; et
la cinquième paroi verticale (16) est reliée à une extrémité d'ouverture de la seconde structure d'encoche, et le bord de liaison (14) est relié à une extrémité de la deuxième paroi verticale (5) adjacente à la troisième paroi verticale (8).
